# EUROPEAN PATENT APPLICATION

(11) **EP 4 361 199 A1**
(43) Date of publication of application: **01.05.2024**
(21) Application number: 22827638.2
(22) Date of filing: 23.06.2022
(51) Int. Cl.: C08G 73/10, B01D 71/64, B01D 69/08, B01D 63/02

(54) **POLYIMIDE COPOLYMER AND FILM, PREPARATION METHODS THEREFOR AND APPLICATIONS THEREOF, AND SYSTEM AND METHOD FOR PURIFYING HELIUM**

(30) Priority: 23.06.2021 CN 202110699869; 29.07.2021 CN 202110866371; 29.07.2021 CN 202110864549
(71) Applicant: China Petroleum & Chemical Corporation, Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN); Institute Of Process Engineering Chinese Acadamy Of Sciences, 100190 Beijing (CN)
(72) Inventor: WU, Changjiang, Beijing 100013 (CN); ZHANG, Suojiang, Beijing 100190 (CN); WEI, Xin, Beijing 100013 (CN); LI, Hesheng, Beijing 100013 (CN); LUO, Shuangjiang, Beijing 100190 (CN); WANG, Yujie, Beijing 100013 (CN); ZHANG, Xinmiao, Beijing 100013 (CN); DING, Liming, Beijing 100013 (CN); MENG, Fanning, Beijing 100013 (CN); XI, Renjie, Beijing 100013 (CN); XU, Yixiao, Beijing 100013 (CN)
(74) Representative: Hoffmann Eitle
(86) International application number: PCT/CN2022/100611
(87) International publication number: WO 2022/268146

(57) **Abstract**

The present application relates to a polyimide random copolymer having a structure represented by formula (I). The present application also relates to a method for preparing the polyimide random copolymer, a membrane made of the polyimide random copolymer, and a method for preparing a polyimide-based hollow fiber membrane. The present application further relates to a system for purifying helium gas and a method for purifying helium gas.

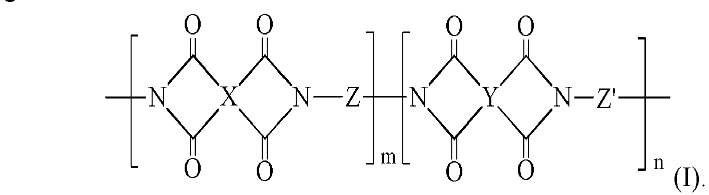

## Description

### Technical field

The present application relates to a polyimide copolymer and its preparation method.

The present application also relates to a membrane made of the polyimide copolymer, a method of preparing said membrane, and a method for gas separation using said membrane and a use of said membrane for gas separation.

The present application also relates to a system and a method for purifying helium gas.

### Backgrounds

Gas membrane separation is a "green technology". Compared with traditional separation technologies such as adsorption, absorption, cryogenic separation, etc., membrane separation technology has the advantages of high separation efficiency, low energy consumption, simple operation, and the like. It is a mainstream technology for gas separation in the future. It has broad application prospects in fields such as natural gas helium-removing, hydrogen purification, decarbonization and the like.

Polyimide has both high permeability and selectivity, and is an ideal gas separation membrane material. Although some progresses have been made in the use of polyimide for separation membranes, the seeking for polyimide materials with better permeability and/or selectivity and good thermal stability, mechanical stability, chemical stability and/or membrane-forming properties is still an interesting focus.

Helium is a very important industrial gas due to its extremely stable chemical nature as well as its special properties such as very strong diffusivity, good thermal conductivity, low solubility and low latent heat of vaporization. Due to its unique properties, helium is widely used in fields such as cryogenics, aerospace, electronics industry, biomedicine, nuclear facility and the like. The current helium purification and refining process is a cryogenic process. In the cryogenic process which extracts helium from natural gas, there are problems such as stringent equipment design and manufacturing requirements, high construction and operation costs, huge size of equipment, high energy consumption, etc. Therefore, technicians are constantly seeking for new systems and new processes for purifying helium.

### Contents of the invention

The present application provides a polyimide random copolymer (random copolyimide). The polyimide random copolymer provided by the invention has good permeability and selectivity.

A first aspect of the present invention provides a polyimide random copolymer, which has a structure represented by formula (I): 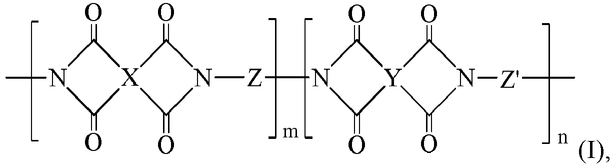
in formula (I), m and n are each independently an integer from 10 to 2000;
X is any one selected from the group consisting of formulas (X3) and (X4); 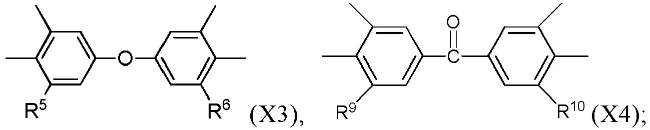
in formula (X3) and formula (X4), R⁵, R⁶, R⁹ and R¹⁰ are each independently H, an optionally substituted C1-C4 alkyl group, or an optionally substituted C6-C10 aryl group;
Y is any one selected from the group consisting of formulas (Y1), (Y3), (Y4) and iptycene-based structures 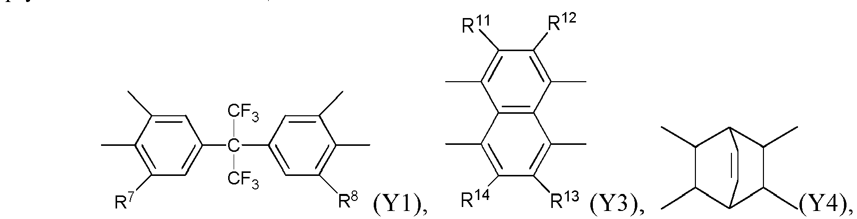
in formulas (Y1) and (Y3), R⁷, R⁸, R¹¹, R¹², R¹³, and R¹⁴ are each independently H, an optionally substituted C1-C4 alkyl, or an optionally substituted C6-C10 aryl group;
Z and Z' are each independently selected from the group consisting of iptycene-based structures and an optionally substituted formula (Z1);

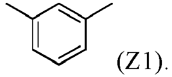

A second aspect of the present invention provides a method for preparing the polyimide random copolymer of the first aspect, the method comprising the following steps:
(1) in the presence of a first solvent, mixing a mixture containing a dianhydride monomer represented by formula (II) and a dianhydride monomer represented by formula (III) with a diamine monomer and performing a condensation polymerization reaction to obtain a poly(amic acid); 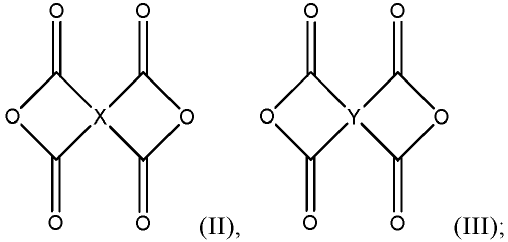
(2) imidizing the poly(amic acid) obtained in step (1) to obtain the polyimide random copolymer.

In the second aspect, said X and Y are as defined in the first aspect, and said diamine monomer corresponds to NH₂-Z-NH₂ and NH₂-Z'-NH₂, where Z and Z' are as defined in the first aspect.

A third aspect of the present invention provides a polyimide random copolymer prepared by the method described in the second aspect.

A fourth aspect of the present invention provides a membrane prepared from the polyimide random copolymer of the first aspect. According to some embodiments, the membrane is a separation membrane, preferably a gas separation membrane. According to some preferred embodiments, the membrane is a hollow fiber membrane.

A fifth aspect of the present invention provides the use of the polyimide random copolymer described in the first or third aspect or the membrane described in the fourth aspect in gas separation.

A sixth aspect of the present invention provides a method for preparing a polyimide-based hollow fiber membrane, the method comprising the following steps:
(1) preparing a casting solution containing the polyimide of the first or third aspect;
(2) extruding the casting solution and a bore fluid, and then solidifying to obtain a hollow fiber membrane precursor;
(3) winding and extracting the hollow fiber membrane precursor to obtain the polyimide-based hollow fiber membrane.

A seventh aspect of the present invention provides a system for purifying helium gas, wherein the system includes a catalytic dehydrogenation separation unit, a polymer membrane separation unit and a palladium membrane separation unit. Preferably, the catalytic dehydrogenation separation unit includes a catalytic oxidation device and an adsorption device. According to some embodiments, the polymer membrane separation unit comprises the membrane of the fourth aspect of the invention.

An eighth aspect of the present invention provides a method for purifying helium gas, wherein the method includes: subjecting a feed gas sequentially to catalytic dehydrogenation separation, polymer membrane separation and palladium membrane dehydrogenation separation to obtain a purified helium gas. According to some embodiments, the polymer membrane separation includes the use of the membrane of the fourth aspect of the invention.

The invention provides a polyimide random copolymer obtained by condensation polymerization of two dianhydrides with specific structures and a diamine with specific structure as monomers. Surprisingly, it was found that the selection of structural units in the polyimide of the present invention endows membranes (e.g. hollow fiber membranes) prepared from the polyimide copolymer of the present invention with excellent gas permeability property and/or selectivity, in particular for He and/or H₂. Moreover, the polyimide random copolymer of the present invention possesses other good properties, including thermal stability, mechanical stability, chemical stability and membrane-forming property.

The polyimide-based hollow fiber membrane provided by the invention has a thin dense layer (separation layer) and a support layer with a sponge-like pore structure. The support layer with high porosity and the thin separation layer can effectively reduce the resistance and increase the permeability rate of the membrane. In addition, the polyimide-based hollow fiber membrane has high mechanical strength such as compressive strength. In the hollow fiber membrane preparation method provided by the present invention, a bimodal pore size distribution can be obtained, thereby achieving precise screening of gas molecules. In the present invention, an asymmetric ultra-thin polyimide hollow fiber membrane is prepared through a dry jet wet spinning phase inversion method, wherein the thickness of the dense layer of which can be controlled to be equal to or below 1 µm, and the support layer has high porosity. The hollow fiber membrane provided by the present invention is suitable for the separation of gas mixtures, including but not limited to CO₂ and CH₄, O₂ and N₂, He and N₂, He and CH₄, CO₂ and N₂, He and CO₂, H₂ and N₂, H₂ and CH₄, H₂ and CO₂ separations, etc., preferably suitable for the purification of helium or hydrogen.

By combining polymer membrane separation technology with catalytic oxidation dehydrogenation and palladium membrane separation processes, the present invention enables the preparation of high-purity helium gas (5N or 6N grade helium gas) by using natural gas, shale gas, multi-stage boil off gas and the like as feed gas. The helium purification method of the present invention includes: firstly, removing hydrogen preliminarily by converting hydrogen in the feed gas into H₂O and the like through catalytic oxidation and by adsorption through an alkaline adsorption drying process; then purifying the helium by using an one-stage or multi-stage polymer membrane separation process to obtain a crude helium; and subjecting the crude helium gas as obtained to a palladium membrane dehydrogenation separation to remove trace amount of hydrogen, wherein the helium gas is further purified to an ultrapure grade. The helium purification method of the present invention can purify helium to 5N grade or 6N grade under mild temperature and pressure conditions, with reduced energy consumption and equipment requirements in the helium purification procedure, making the helium preparation process simple, economical and continuous and stable.

### Description of the Figures

Figure 1 is an infrared spectrum of the polyimide random copolymer prepared in Preparation Example 2;
Figure 2 is an infrared spectrum of the polyimide random copolymer prepared in Preparation Example 3;
Figure 3 is an infrared spectrum of the polyimide random copolymer prepared in Preparation Example 4;
Figure 4 is a cross-sectional scanning electron microscope image of the polyimide-based hollow fiber membrane prepared in Hollow Fiber Membrane Preparation Example 2;
Figure 5 is a cross-sectional scanning electron microscope image of the polyimide-based hollow fiber membrane prepared in Hollow Fiber Membrane Preparation Example 3;
Figure 6 is a cross-sectional scanning electron microscope image of the polyimide-based hollow fiber membrane prepared in Hollow Fiber Membrane Preparation Example 12;
Figure 7 is a cross-sectional scanning electron microscope image of the polyimide-based hollow fiber membrane prepared in Comparative Hollow Fiber Membrane Preparation Example S2;
Figure 8 is a ¹H NMR spectrum of the polyimide-based hollow fiber membrane prepared in Hollow Fiber Membrane Preparation Example 1;
Figure 9 is the pore size distribution of flat homogeneous membranes prepared from the polyimide copolymers of Preparation Example 4 and Preparation Example 10; wherein the curve represented by the dots is Preparation Example 10, and the curve represented by squares is Preparation Example 4.

### Embodiments of the Invention

The endpoints of ranges and any values disclosed herein are not limited to precise ranges or values, but these ranges or values are to be understood to include values near said ranges or values. For numerical ranges, the endpoint values of various ranges, the endpoint values of various ranges and individual point values, and the individual point values can be combined with each other to obtain one or more new numerical ranges, and these numerical ranges shall be deemed to be concretely disclosed herein.

In the present invention, "room temperature" means from about 20°C to about 25°C.

In the present invention, the pressure mentioned in the present invention is gauge pressure, unless otherwise specified.

In the present invention, the term "and/or" encompasses "and" and "or". Elements modified with "and/or" are intended to encompass any one and any combination thereof. For example, A and/or B encompasses A, B, and A+B. A, B and/or C encompasses A, B, C, A+B, A+C, B+C and A+B+C.

In the present invention, "C1-C4 alkyl group" includes methyl, ethyl, n-propyl, isopropyl, n-butyl, isobutyl, and tert-butyl. "C6-C10 aryl group" includes phenyl, tolyl, (o-, m-, p-)xylyl, ethylphenyl, methylethylphenyl, propylphenyl, butylphenyl, etc. The C1-C4 alkyl group may be optionally substituted with a substituent selected from halogen. The halogen is selected from, for example, fluorine, chlorine, bromine and iodine, preferably from fluorine and chlorine. The C6-C10 aryl group may be optionally substituted with a substituent selected from halogen. The halogen is selected from, for example, fluorine, chlorine, bromine and iodine, preferably from fluorine and chlorine. "C1-C4 haloalkyl" includes C1-C4 alkyl substituted by one or more halogens selected from fluorine, chlorine and bromine, wherein the C1-C4 alkyl comprising methyl, ethyl, n-propyl, isopropyl, n-butyl, isobutyl, tert-butyl; the "C1-C4 haloalkyl" includes, for example, but is not limited to monofluoromethyl, difluoromethyl, trifluoromethyl, monofluoroethyl, difluoroethyl, trifluoroethyl, monochloromethyl, dichloromethyl, trichloromethyl, etc. "C1-C4 saturated monohydric alcohols" include methanol, ethanol, n-propanol, isopropanol, n-butanol, and isobutanol. "C3-C5 alkanes" include linear and branched alkanes with 3-5 carbon atoms, for example including but not limited to n-propane, isopropane, n-butane, isobutane, n-pentane, isopentane, neopentane; or cycloalkanes, such as cyclopropane, cyclobutane, and cyclopentane. "C5-C7 alkanes" include linear and branched alkanes with 5-7 carbon atoms, for example including but not limited to n-pentane, isopentane, neopentane, n-hexane, isohexane, n-heptane, and isoheptanes; or cycloalkanes, such as cyclopentane, cyclohexane, and cycloheptane.

The first aspect of the present invention provides a polyimide random copolymer, which has a structure represented by formula (I): 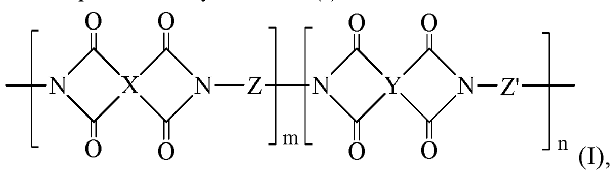
in formula (I), m and n are each independently an integer from 10 to 2000;
X is any one selected from the group consisting of formulas (X3) and (X4); 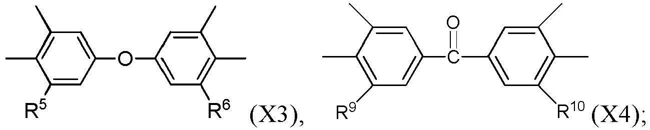
in formula (X3) and formula (X4), R⁵, R⁶, R⁹ and R¹⁰ are each independently H, an optionally substituted C1-C4 alkyl group, or an optionally substituted C6-C10 aryl group;
Y is any one selected from the group consisting of formulas (Y1), (Y3), (Y4) and iptycene-based structures 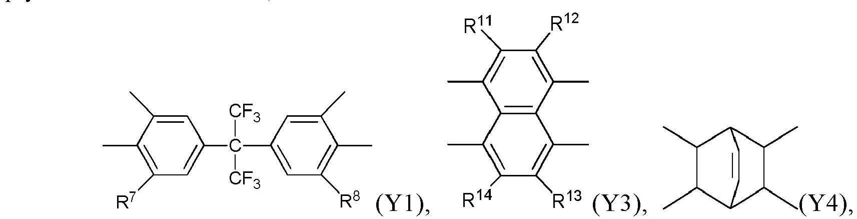
in formulas (Y1) and (Y3), R⁷, R⁸, R¹¹, R¹², R¹³, and R¹⁴ are each independently H, an optionally substituted C1-C4 alkyl, or an optionally substituted C6-C10 aryl group;
Z and Z' are each independently selected from the group consisting of iptycene-based structures and an optionally substituted formula (Z1);

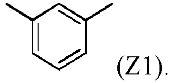

According to some embodiments of the present invention, m and n may each independently be an integer from 50 to 1000.

According to some embodiments of the present invention, m and n are defined as 0.95 ≥ n/(m+n) ≥ 0.3, preferably 0.9 ≥ n/(m+n) ≥ 0.3, more preferably, 0.7 ≥ n/(m+ n) ≥ 0.5.

According to some preferred embodiments of the present invention, m and n are defined as 0.95 ≥ n/(m+n) ≥ 0.5, preferably, 0.9 ≥ n/(m+n) ≥ 0.6.

According to some embodiments of the present invention, the iptycene-based structures are selected from the group consisting of triptycene-based structures or pentiptycene-based structures. Preferably, the iptycene-based structure as Y is formula (Y5), and/or the iptycene-based structures as Z and Z' are each independently (Z2): 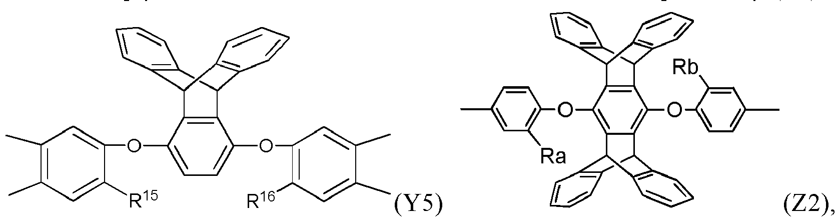 wherein R¹⁵ and R¹⁶ are each independently H, an optionally substituted C1-C4 alkyl group, or an optionally substituted C6-C10 aryl group; Ra and Rb are each independently H, C1-C4 alkyl group or C1-C4 haloalkyl group.

In the present invention, the "optionally substituted C1-C4 alkyl group" is a "C1-C4 alkyl group" optionally substituted by one or more halogen substituents. The "optionally substituted C6-C10 aryl group " is a "C6-C10 aryl group" optionally substituted by one or more substituents selected from the group consisting of halogen and C1-C4 alkoxy. The "optionally substituted formula (Z1)" is a "formula (Z1)" optionally substituted by one or more substituents selected from the group consisting of halogen, C1-C4 alkyl and C1-C4 alkoxy. The halogen is selected from, for example, fluorine, chlorine, bromine and iodine, preferably from fluorine and chlorine. The C1-C4 alkoxy is, for example, selected from the group consisting of methoxy, ethoxy, propoxy and butoxy.

According to some embodiments of the present invention, Z and Z' are the same.

the According to some embodiments of the present invention, X is any one selected from the group consisting of the structures shown below, 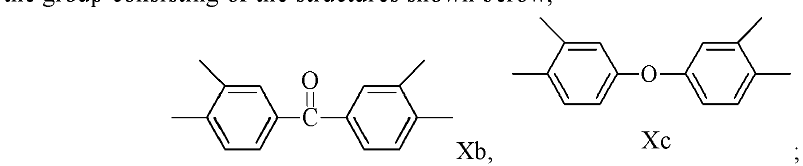 and/or, Y is any one selected from the group consisting of the structures shown below, 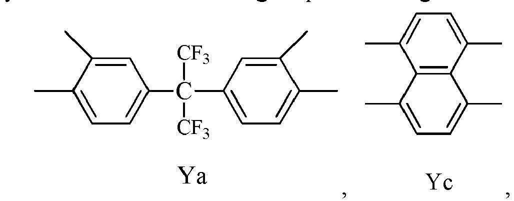 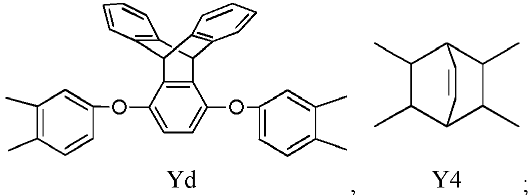 and/or, Z and Z' are each independently selected from the structure represented by Z1 or Z3,

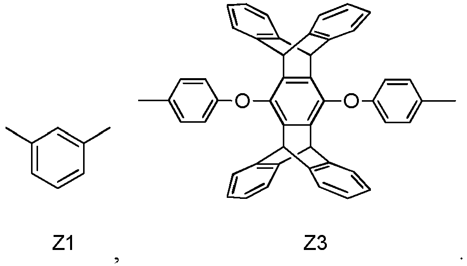

In the structural formulas mentioned in the present invention, "-" represents the connection position with other parts.

According to some preferred embodiments of the present invention, wherein,
X is Xb, Y is Ya, Z and Z' are both Z1;
or, X is Xb, Y is Yd, Z and Z' are both Z1;
or, X is Xc, Y is Ya, Z and Z' are both Z1;
or, X is Xc, Y is Yc, Z and Z' are both Z1;
or, X is Xc, Y is Y4, Z and Z' are both Z1;
or, X is Xc, Y is Yd, Z and Z' are both Z1;
or, X is Xb, Y is Ya, Z and Z' are both Z3;
or, X is Xb, Y is Yd, Z and Z' are both Z3;
or, X is Xc, Y is Ya, Z and Z' are both Z3;
or, X is Xc, Y is Yd, Z and Z' are both Z3.

Although according to preferred embodiments of the present invention, each of X, Y, Z and Z' has a specific structure, the present invention does not exclude that X represents two different structures, Y represents two, three or four different structures, Z represents two different structures and/or Z' represents two different structures.

The present invention also relates to a method for preparing a polyimide random copolymer, which is based on a principle in which dianhydride monomers (a dianhydride represented by the following formula (II) and a dianhydride represented by the formula (III)) and a diamine monomer firstly undergo a condensation polymerization reaction to obtain a poly(amic acid), and then the poly(amic acid) is imidized (intramolecular dehydration). This general process for preparing polyimide polymers is known in the art. The method of the present invention may either be performed through an one-pot process (that is, all monomers are mixed directly in the reactor and reacted) in which the dianhydride monomers and the diamine monomer undergo a condensation polymerization reaction to obtain a poly(amic acid), or be performed by first mixing (preferably uniformly mixing) the dianhydride monomers (i.e., the dianhydride represented by formula (II) and the dianhydride represented by formula (III)), and then mixing the dianhydride monomers mixture with the diamine monomer to undergo a condensation polymerization reaction. In order to control the progress of the reaction better, it is preferred to carry out the reaction in the latter way.

The second aspect of the present invention provides a method for preparing the polyimide random copolymer of the present invention, the method comprising the following steps:
(1) in the presence of a first solvent, mixing a mixture containing a dianhydride monomer represented by formula (II) and a dianhydride monomer represented by formula (III) with a diamine monomer to perform a condensation polymerization reaction to obtain a poly(amic acid); 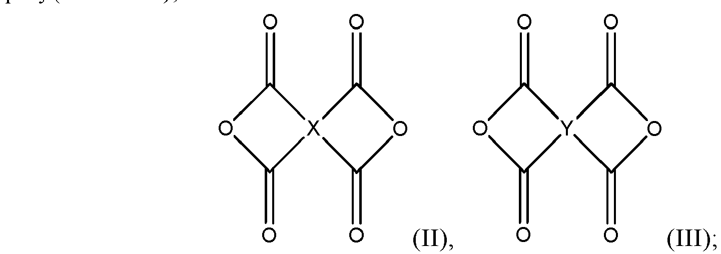
(2) imidizing the poly(amic acid) obtained in step (1) to obtain the polyimide random copolymer.

As understood by those skilled in the art, X in the dianhydride monomer represented by formula (II) corresponds to X in the structure represented by formula (I) in the present application, Y of the dianhydride monomer represented by formula (III) corresponds to Y in the structure represented by formula (I) in the present application, and the diamine monomer has the formula NH₂-Z-NH₂ and/or NH₂-Z'-NH₂, where Z in NH₂-Z-NH₂ corresponds to Z in the structure represented by formula (I), and Z' in NH₂-Z'-NH₂ corresponds to Z' in the structure represented by formula (I).

In the above method, X, Y as well as Z and Z' each may be as defined in the first aspect above.

According to some embodiments of the present invention, the molar amounts of the dianhydride monomer represented by formula (II) and the dianhydride monomer represented by formula (III) are defined as M and N respectively.

According to some preferred embodiments of the present invention, M and N are defined as 0.95 ≥ N/(M+N) ≥ 0.5, preferably, 0.9 ≥ N/(M+N) ≥ 0.6.

According to some embodiments of the present invention, the molar ratio of the total molar amount of the dianhydride monomer represented by formula (II) and the dianhydride monomer represented by formula (III) to the molar amount of the diamine monomer is 1: (0.6-1.5), preferably 1: (0.8-1.2).

The condensation polymerization reaction is known in the art and can be carried out under condensation polymerization reaction conditions generally known in the art. According to some embodiments of the present invention, in step (1), the conditions for the condensation polymerization reaction may include: a reaction temperature of from -20 °C to 60 °C, preferably from -10 °C to 40 °C; a reaction period of 5-30h, preferably 8-24h.

In the present invention, the condensation polymerization reaction can be carried out under an inert atmosphere. An inert atmosphere generally known in the art can be used; for example, the inert atmosphere is preferably provided by nitrogen gas. The pressure of the polymerization reaction or the pressure of the inert atmosphere can be selected freely by those skilled in the art, but is preferably atmospheric pressure.

According to some embodiments of the present invention, the first solvent may be at least one selected from the group consisting of N,N-dimethylformamide, N,N-dimethylacetamide, dimethyl sulfoxide and N-methyl-2-pyrrolidone (NMP), and mixtures thereof, preferably selected from N-methyl-2-pyrrolidone and/or N,N-dimethylformamide.

According to some embodiments of the present invention, the using amount of the first solvent is 1000-3000 mL for 1 mol of diamine monomer.

In the present invention, the dianhydride monomer represented by formula (II) and the dianhydride monomer represented by formula (III) may be mixed in any suitable manner to obtain a mixture. According to some embodiments, the mixture may be obtained by mixing in the following manners: mechanical stirring, shaking, or ultrasonic treatment. Mechanical stirring conditions may include: 20-40 °C, 2000-15000rpm, 2-12h. Ultrasonic treatment conditions may include: 20-40 °C, 0.5-2.0h. The shaking conditions may include: 20-40 °C, 260-800rpm, 12-36h. Alternatively, the dianhydride monomer represented by formula (II) and the dianhydride monomer represented by formula (III) can be added into the first solvent and then further mixed with the diamine monomer.

Imidization of poly(amic acid) is known in the art. The poly(amic acid) obtained in step (1) can be imidized using various ways known in the art to obtain a polyimide random copolymer. According to some embodiments of the present invention, imidization includes adding a dehydrating agent and a catalyst to the poly(amic acid)-containing material obtained in step (1), and reacting at 0-200 °C for 12-24 hours.

According to some embodiments of the present invention, the dehydrating agent is at least one selected from the group consisting of dichlorobenzene, toluene, acetic anhydride, xylene and mixtures thereof.

According to some embodiments of the invention, the catalyst is selected from pyridine and/or isoquinoline.

According to some embodiments of the present invention, the amount of the dehydrating agent may be 2-15 mol, preferably 3-8 mol, for 1 mol of the diamine monomer.

According to some embodiments of the present invention, the amount of the catalyst may be 2-15 mol, preferably 3-8 mol, for 1 mol of the diamine monomer.

According to some embodiments of the present invention, the method for preparing polyimide further includes: diluting the imidized material in step (2) and contacting it with a precipitating agent to obtain the polyimide copolymer. The precipitating agent can be a poor solvent for the polyimide. For example, the precipitating agent may be at least one selected from the group consisting of ethanol, acetone and water, and more preferably at least two selected from the group consisting of ethanol, acetone and water. The total amount of the precipitating agent may be 10-50L, for 1 mol of the diamine monomer. The solvent used for dilution may be N-methyl-2-pyrrolidone. Preferably, the amount of solvent used for dilution may be 5-8L, for 1 mol of the diamine monomer.

In the present invention, there is no particular restriction on the way in which the imidized material in step (2) is contacted with the precipitating agent, provided it can meet the requirements of the present invention. For example, it may be carried out as follows: adding the imidized material in step (2) (after dilution) into the precipitating agent to precipitate the polyimide, then rinsing the as-precipitated polyimide with the precipitating agent (may rinse for 3-5 times), and finally suction filtrating and drying (70-150 °C, 24-48h), to obtain the polyimide random copolymer.

The third aspect of the present invention provides the polyimide random copolymer prepared by the method of the second aspect.

The fourth aspect of the invention provides a membrane prepared from a polyimide polymer, preferably prepared from the polyimide random copolymer of the first aspect.

According to some embodiments, the membrane is a separation membrane, preferably a gas separation membrane.

According to some embodiments, the membrane may be a flat membrane, preferably a flat homogeneous membrane.

In the present invention, the preparation methods of the flat membrane, such as gas separation membrane, are not particularly restricted. For example, it can be carried out by conventional membrane preparation methods in the field. For example, the gas separation membrane (homogeneous membrane) can be prepared with reference to CN107968214A.

Alternatively, the following method can be used to prepare a flat membrane: applying the casting solution containing the polyimide random copolymer onto a support plate (such as a glass plate), and subjecting it to the first drying at 50-80 °C for 6-24 hours (to remove most of the solvent); subjecting it to the second drying at 100-140 °C for 12-48 hours; then soaking it (for example, soaking it in deionized water until the membrane falls off the surface of the glass plate) to obtain a polyimide random copolymer gas separation membranes. The casting solution can be obtained as follows: mixing the polyimide random copolymer with a second solvent and stirring (for example, in a shaker) at 40-80 °C until the copolymer is completely dissolved to obtain a uniform casting solution; and subjecting the uniform casting solution to an ultrasonic deaeration treatment to obtain a uniform and stable casting solution.

According to some embodiments, the second solvent is used in an amount such that the solid content of the polyimide random copolymer is 5-60 wt%.

According to some embodiments, the second solvent may be at least one selected from the group consisting of N,N-dimethylformamide, N,N-dimethylacetamide, dimethyl sulfoxide, N-methyl-2-pyrrolidone, tetrahydrofuran, ethanol, and mixtures thereof.

According to some embodiments, the first solvent and the second solvent may be the same or different.

According to some embodiments, the thickness of the polyimide copolymer flat membrane may be 30-50 µm.

According to some embodiments, the polyimide copolymer flat membrane, such as a gas separation membrane, is a homogeneous membrane.

According to some preferred embodiments, the membrane is a hollow fiber membrane. The hollow fiber membrane includes a support layer and a dense layer attached to the outer surface of the support layer. Both the support layer and the dense layer are formed from the polyimide random copolymer. Preferably, the thickness of the dense layer is less than or equal to 1000 nm and the porosity of the hollow fiber membrane (support layer) is 40-80%; more preferably, the thickness of the dense layer is 100-500 nm and the porosity of the hollow fiber membrane is 50-70%. The porosity of the hollow fiber membrane was measured by mercury intrusion porosimetry.

The outer diameter and inner diameter of the hollow fiber membrane can be appropriately determined by those skilled in the art. For example, the outer diameter of the hollow fiber membrane may be 50 microns to 2000 microns, preferably 100 microns to 1000 microns, more preferably 200 microns to 900 microns, still more preferably 300 microns to 800 microns, such as 400 microns to 700 microns, such as preferably 450 microns to 650 microns, such as about 500 microns or about 600 microns. The inner diameter of the hollow fiber membrane may be 10 microns to 1000 microns, preferably 40 microns to 800 microns, more preferably 60 microns to 600 microns, still more preferably 80 microns to 400 microns, such as 100 microns to 300 microns, such as preferably 120 microns to 250 microns, such as about 150 microns or about 200 microns.

According to some embodiments of the present invention, the thickness of the dense layer is 100-2000nm, preferably 100-1000nm, more preferably 200-500nm; such as 100nm, 150nm, 200nm, 250nm, 300nm, 350nm, 400nm or any value between above values.

According to some embodiments of the present invention, the porosity of the hollow fiber membrane (support layer) is 50-70%.

The fifth aspect of the present invention provides the use of the polyimide random copolymer described in the first or third aspect or the membrane described in the fourth aspect in gas separation. The use of polymer membranes for gas separation is known in the art. The polymer membranes of the present invention can be used for gas separation in any suitable manner known in the art.

The sixth aspect of the present invention provides a method for preparing a polyimide-based hollow fiber membrane. The method includes the following steps:
(1) preparing a casting solution containing a polyimide, preferably the polyimide of the first or third aspect of the present invention;
(2) extruding a bore fluid and the casting solution, and then solidifying to obtain a hollow fiber membrane precursor;
(3) winding and extracting the hollow fiber membrane precursor to obtain the polyimide-based hollow fiber membrane.

According to some embodiments, the method for preparing a polyimide-based hollow fiber membrane of the present invention includes the following steps:
(1) preparing a casting solution containing a polyimide, a diluent and an optional additive, wherein the diluent contains a good solvent for the polyimide, a first poor solvent for the polyimide and a second poor solvent for the polyimide, wherein the boiling point B1 of the first poor solvent for the polyimide is higher than the boiling point B2 of the second poor solvent for the polyimide;
(2) extruding a bore fluid and the casting solution at a temperature T, and then solidifying to obtain a hollow fiber membrane precursor, where B2 ≤ T < B1;
(3) winding and extracting the hollow fiber membrane precursor to obtain the polyimide-based hollow fiber membrane.

According to some embodiments of the present invention, in step (1), the content of the polyimide is 20-40 wt%, the content of the diluent is 50-75wt%, and the content of the additives, when present, is 0.5 to 10 wt%, based on the total weight of the casting solution.

According to some embodiments of the present invention, the content of the polyimide is 25-35wt%, the content of the diluent is 60-70wt%, and the content of the additive, when present, is 1-5wt%, based on the total weight of the casting solution.

According to some embodiments of the present invention, in order to facilitate the formation of the dense layer of the hollow fiber membrane, the boiling point B1 of the first poor solvent for the polyimide is 5-200 °C higher, preferably 10-20 °C higher, than the boiling point B2 of the second poor solvent for the polyimide. Wherein the boiling point refers to the boiling point under normal pressure.

According to some embodiments of the present invention, the first poor solvent for the polyimide is at least one selected from the group consisting of C2-C4 saturated monohydric alcohols, γ-butyrolactone, water, and mixtures thereof.

According to some embodiments of the present invention, the second poor solvent for the polyimide is at least one selected from the group consisting of C3-C5 alkanes, tetrahydrofuran, acetone, chloroform, and mixtures thereof.

According to some embodiments of the present invention, the good solvent for the polyimide is at least one selected from the group consisting of N-methyl-2-pyrrolidone, N,N- dimethylformamide, N,N-dimethylacetamide and mixtures thereof.

According to some embodiments of the present invention, the weight ratio of the good solvent for the polyimide, the first poor solvent for the polyimide and the second poor solvent for the polyimide is 1: (0.001-0.5): (0.1-0.5), preferably 1: (0.15-0.3): (0.15-0.3).

According to some embodiments of the present invention, the additive may be a lithium salt, preferably selected from lithium nitrate and/or lithium chloride.

According to some embodiments of the present invention, the casting solution contains the additive. According to some embodiments of the present invention, the casting solution does not contain the additive.

According to some embodiments of the present invention, in step (1), the casting solution is prepared according to a method including the following steps: stirring the polyimide, diluent and optional additives at 20-50 °C, 100-1200r/min for 12-48 hours, and then vacuum deaerating and removing impurities by filtrating (for example, 20-50 °C), to obtain the casting solution.

According to some embodiments of the present invention, the vacuum deaeration conditions include: a pressure from -0.1MPa to -0.095MPa, a temperature of 20-30 °C, a rotation speed of 10-50r/min., and a period of 12-24h.

According to some embodiments of the present invention, in step (2), the bore fluid contains solvent A and solvent B, wherein the solvent A is at least one selected from the group consisting of N-methyl-2-pyrrolidone, N,N-dimethylformamide, N,N-dimethylacetamide and mixtures thereof, and the solvent B is at least one selected from the group consisting of C1-C4 saturated monohydric alcohols, γ-butyrolactone, water, and mixtures thereof.

According to some embodiments of the present invention, the solvent A accounts for 50-99wt%, preferably 60-95wt% of the total weight of the bore fluid; and the solvent B accounts for 50-1wt%, preferably 40-5wt% of the total weight of the bore fluid.

According to some embodiments of the invention, the extrusion is performed in a spinneret. According to some embodiments, the extrusion temperature (spinneret temperature) is 40-75 °C, preferably 60-70 °C. Spinnerets for hollow fiber membrane preparation are known in the art. Those skilled in the art can appropriately select the spinneret to be used.

According to some embodiments of the present invention, during the extrusion process, the flow rate of the casting solution is 6-30 mL/min.

According to some embodiments of the present invention, during the extrusion process, the flow rate of the bore fluid is 2-10 mL/min.

According to some embodiments of the present invention, before solidification, the hollow fiber resulting from extrusion is passed through an air gap to promote the formation of the dense layer and to control the thickness of the dense layer better.

According to some embodiments of the present invention, the height of the air gap is 5-30 cm.

According to some embodiments of the present invention, the air gap may be heated using an annular sleeve; preferably the temperature is controlled to be 50-150 °C, and more preferably, the temperature is controlled to be 70-150 °C.

According to some embodiments of the invention, the solidification is performed in a coagulation bath. Preferably, the bath liquid used in the coagulation bath is solvent C and/or water. According to some embodiments, the temperature of the coagulation bath is 40-70 °C.

According to some embodiments of the present invention, the solvent C is at least one selected from the group consisting of C1-C4 saturated monohydric alcohols, γ-butyrolactone, water and mixtures thereof.

According to some embodiments of the present invention, in step (3), the winding speed is 0.5-2m/s.

In the present invention, the purpose of the extraction is to remove the diluent and additive in the hollow fiber membrane precursor.

According to some embodiments of the present invention, the extraction agent used for the extraction is at least one selected from the group consisting of water, C1-C4 saturated monohydric alcohols, C5-C7 alkanes, and mixtures thereof. There is no particular limitation on the amount of extraction agent used, as long as it can meet the requirements of the present invention.

According to some embodiments of the present invention, the extraction conditions include: a temperature of 20-35 °C and a time period of 3-48 hours. Extraction time period refers to the soaking time of membrane filaments (hollow fiber membrane precursor).

In the present invention, preferably, the extraction is carried out in a manner as follows: sequentially extracting 2-5 times in water, a C1-C4 saturated monohydric alcohol and a C5-C7 alkane, respectively.

According to some embodiments of the present invention, a step of drying is further included after the extraction.

According to some embodiments of the present invention, the drying conditions include: a temperature of 20-35 °C and a time period of 2-15 hours.

The present invention also provides a polyimide-based hollow fiber membrane prepared by the method described in the sixth aspect.

The seventh aspect of the present invention provides a system for purifying helium gas, wherein the system includes a catalytic dehydrogenation separation unit, a polymer membrane separation unit and a palladium membrane separation unit. Preferably, the polymer membrane separation unit uses the membrane of the present invention, preferably the polyimide-based hollow fiber membrane of the present invention. Preferably, the catalytic dehydrogenation separation unit includes a catalytic oxidation device and an adsorption device.

The eighth aspect of the present invention provides a method for purifying helium gas, wherein the method includes: subjecting a feed gas sequentially to catalytic dehydrogenation separation, polymer membrane separation, and palladium membrane dehydrogenation separation to obtain a purified helium gas, wherein the polymer membrane separation uses the membrane of the present invention, preferably the polyimide-based hollow fiber membrane of the present invention.

According to some embodiments of the present invention, the feed gas may be a mixed gas containing helium, hydrogen and other impurity gases. Preferably, the feed gas may be at least one selected from the group consisting of natural gas, shale gas, helium-rich hydrogen-containing gas (a mixed gas containing helium and hydrogen), and liquefied natural gas boil off gas (BOG). The natural gas or shale gas can be subjected to a multi-stage flash evaporation and then used as feed gas for helium purification.

According to some embodiments of the invention, the catalytic dehydrogenation separation includes catalytic oxidation and adsorption.

According to some embodiments of the present invention, the catalyst used in the catalytic oxidation is a noble metal catalyst; preferably at least one selected from the group consisting of Pt, Pd, Rh, Ru, Au and mixtures thereof.

According to some embodiments of the present invention, the catalytic oxidation conditions include: a temperature of 40-150 °C, preferably 50-120 °C; a space velocity of the feed gas of 1-10000 m³/m³·h, preferably 10-1000 m³/m³·h.

According to some embodiments of the present invention, the conditions of the catalytic oxidation are such that 90-99 volume% of the hydrogen in the feed gas is converted into H₂O.

In the present invention, the oxygen needed in the catalytic dehydrogenation separation process may be provided by the oxygen contained in the feed gas itself, or may be provided by external sources. In order to convert hydrogen into water more completely, the volume proportion of oxygen during the catalytic dehydrogenation separation process is maintained to be greater than or equal to 8%.

The adsorption can adopt any adsorption manner that can adsorb water.

According to some embodiments of the present invention, when the feed gas contains carbon dioxide, in order to remove water and carbon dioxide simultaneously, the adsorption manner is preferably alkaline adsorption. According to some embodiments of the present invention, the adsorbent used in the alkaline adsorption is at least one selected from the group consisting of potassium hydroxide, sodium hydroxide, quicklime and soda lime.

In the present invention, there are no special restrictions on the adsorption conditions, as long as they can meet the requirements of the present invention. According to some embodiments of the present invention, the adsorption conditions include: an adsorption temperature of 70-90 °C.

According to some embodiments of the present invention, the polymer membrane used in the polymer membrane separation and the polymer membrane separation unit is at least one selected from the group consisting of a hollow fiber membrane, a flat membrane, and a tubular membrane; more preferably, it is a hollow fiber membrane.

According to some preferred embodiments, the polymer membrane separation comprises separation conducted by using the membrane of the fourth aspect of the invention. According to some embodiments, the polymeric membrane separation unit comprises the membrane of the fourth aspect of the present invention.

According to some embodiments of the present invention, the polymer membrane separation adopts one-stage or multi-stage membrane (polymer membrane) separation manner (for example, two-stage to five-stage). In the present invention, a two-stage membrane separation refers to a polymer membrane separation in which the permeated gas is pressurized and then used again as a feed gas of a membrane. Three-stage membrane separation, four-stage membrane separation and five-stage membrane separation have similar meanings. The polymer membrane separation process may be from 1 to 5 stages, such as 1 stage, 2 stages, 3 stages, 4 stages, or 5 stages.

According to some embodiments of the present invention, the conditions for the polymer membrane separation include: before the polymer membrane separation, the pressure of the gas resulting from the catalytic dehydrogenation separation is controlled to be 0.01-50MPa, and the temperature of the gas is controlled to be 20-100 °C. Wherein, the pressure of the permeated side ( outlet side) of the polymer membrane separation is lower than the pressure of the positive pressure side (inlet side), and may be a negative pressure.

According to some embodiments of the present invention, the polymer membrane used in the polymer membrane separation is a polyimide-based hollow fiber membrane, preferably the polyimide-based hollow fiber membrane of the present invention.

According to some embodiments of the present invention, the conditions for the palladium membrane dehydrogenation separation may include: before performing the palladium membrane dehydrogenation separation, the temperature of the gas resulting from the polymer membrane separation is controlled to be 50-500°C, preferably 200-500 °C; gas pressure is controlled at be 1-50MPa, preferably 2-20MPa.

According to some embodiments of the present invention, the thickness of the palladium membrane used in the palladium membrane dehydrogenation separation is 5-100 µm.

According to some embodiments of the present invention, the palladium membrane is a tubular membrane or a porous support composite membrane.

According to some embodiments of the present invention, the porous support in the porous support composite membrane is one selected from the group consisting of porous ceramics and porous stainless steel.

According to some embodiments of the present invention, the palladium membrane is a pure palladium membrane or a palladium-based alloy membrane.

According to some embodiments of the present invention, the palladium-based alloy membrane is at least one selected from the group consisting of palladium-yttrium alloy membrane, palladium-cerium alloy membrane, palladium-copper alloy membrane, palladium-gold alloy membrane, palladium-nickel alloy membrane and palladium-silver alloy membrane.

As understood by those skilled in the art, the catalytic dehydrogenation separation unit, polymer membrane separation unit and palladium membrane separation unit in the system for purifying helium gas of the present invention respectively are used for or correspond to the catalytic dehydrogenation separation, polymer membrane separation and palladium membrane dehydrogenation separation in the method for purifying helium gas of the present invention. Those skilled in the art can appropriately select or configure the catalytic dehydrogenation separation unit, the polymer membrane separation unit and the palladium membrane separation unit based on the above-described method for purifying helium gas.

### Examples

In the present invention, the meanings of abbreviations are as follows:
PMDA: pyromellitic dianhydride
BPDA: 3,3',4,4'-biphenyltetracarboxylic dianhydride
ODPA: 4,4'-oxydiphthalic anhydride
6FDA: 4,4'-(hexafluoroisopropylidene) diphthalic anhydride
BTDA: 3,3',4,4'-benzophenone tetracarboxylic dianhydride
TPDAn: Triptycene-based dianhydride (a compound represented by formula (III), where Y is Yd) (prepared with reference to "LUO S J, WIEGAND J R, KAZANOWSKA B, et al. Finely Tuning the Free Volume Architecture in Iptycene-Containing Polyimides for Highly Selective and Fast Hydrogen Transport. Macromolecules 2016, 49, (9): 3395-3405")
mPDA: m-phenylenediamine
PPDA: Pentiptycene-based diamine (with structural formula of 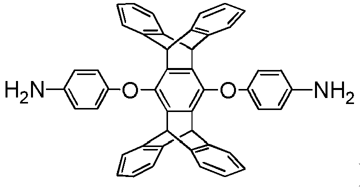 ) (prepared with reference to "LUO S J, LIU Q, ZHANG B H, et al. Pentiptycene-based polyimides with hierarchically controlled molecular cavity architecture for efficient membrane gas separation. J Membrane Sci 2015, 480: 20-30")

The present invention will be described in detail below by examples.

In the following preparation examples, mechanical stirring conditions: room temperature, 10000rpm, Sh; ultrasonic treatment conditions: room temperature, 1h; shaking conditions: 30 °C, 600rpm, 15h.

The hollow spinneret was purchased from Shanghai Trustech Technology Development Co., Ltd (wet NIPS series, model 0.6/0.4/0.2).

Porosity of the support layer of hollow fiber membrane was measured by mercury intrusion porosimetry using a mercury porosimeter (Poremaster-33, Quantachrome, USA) according to GB/T 21650.1-2008.

IR test: A Fourier transform infrared spectrometer (Bruker Tensor 27 or Thermo Nicolet 380) was used and infrared spectra was tested by using total reflection method; the tested wavelength range is 4000 cm⁻¹ ~600 cm⁻¹.

Nuclear magnetic test: a nuclear magnetic resonance spectrometer (Bruker AVANCE III 500 MHz) was used to characterize the ¹H NMR spectrum of the polyimide at room temperature with DMSO-d6 as the solvent and with a scanning frequency of 500 MHz.

Molecular weight Mn test: a gel permeation chromatography (model 1515 from Waters Company) was used to characterize the molecular weight of polyimide; DMF was used as the solvent and monodisperse polystyrene was used to calibrate the molecular weight.

Morphology test: A scanning electron microscope (S-4800, Hitachi) was used to characterize the cross section of the hollow fiber membrane; the membrane filament was quenched and fractured in liquid nitrogen, and a layer of gold was plated on the surface before testing.

Gas volume fraction test: tested in a gas chromatography by using gas chromatograph 6890N from Agilent, USA; chromatographic column: HP-PLOT molecular sieve capillary column; detector: thermal conductivity detector TCD; column temperature: 50°C; carrier gas flow rate: 16mL/min.

In the examples, an one-stage polymer separation represents conducting one polymer membrane separation, and a two-stage polymer membrane separation represents the gas after the one-stage polymer separation is used as the feed gas to perform polymer membrane separation again (using a new membrane module); a three-stage polymer membrane separation, a four-stage polymer membrane separation and a five-stage polymer membrane separation are similar to the above example.

The following preparation examples are used to illustrate the preparation of polyimide random copolymers.

### Preparation Example 1 (Comparative)

(51) Under nitrogen protection, 200mL of anhydrous N-methyl-2-pyrrolidone and m-phenylenediamine (10.81g, 0.1mol) were added in sequence into a 1L three-necked flask, and stirred until the materials were completely dissolved; pyromellitic dianhydride (PMDA) (10.91g, 0.05mol) and 4,4'-(hexafluoroisopropylidene) diphthalic anhydride (6FDA) (22.2g, 0.05mol) were mixed homogeneously under mechanical stirring, and then added into the above system at 10 °C; and the obtained mixture underwent condensation polymerization reaction for 12 hours, obtaining a material containing poly(amic acid);

(S2) A mixture of acetic anhydride (40.836g, 0.4mol) and pyridine (31.60g, 0.4mol) was added to the material containing poly(amic acid) obtained in step (S1), and underwent intramolecular dehydration at 25°C for 18h to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain the polyimide, which was then rinsed (1000mL× 3) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-1. Infrared test shows that PI-1 has a polyimide structure. In addition, the raw materials were not detected in the remaining liquid phase after the polyimide was precipitated. Wherein, the mixed solvent after the polymer was precipitated was sampled and the hydrogen spectrum of the mixed solvent was characterized with a nuclear magnetic resonance spectrometer (Bruker Avance III 400 HD, Bruker) at room temperature and using DMSO-d6 as solvent. No characteristic peaks of benzene ring were found, indicating that the raw materials were not detected in the liquid phase remaining after the polyimide was precipitated. This indicates that all monomers participated in the reaction (indicating that all raw materials participated in the reaction).

### Preparation Example 2 (Comparative)

(S1) Under nitrogen protection, 200mL anhydrous N-methyl-2-pyrrolidone and m-phenylenediamine (10.81g, 0.1mol) were added in sequence into a 1L three-necked flask, and stirred until the materials were completely dissolved; 3,3',4,4'-biphenyltetracarboxylic dianhydride (BPDA) (14.71g, 0.05mol) and 4,4'-(hexafluoroisopropylidene) diphthalic anhydride (6FDA) (22.2g, 0.05mol) were mixed homogeneously under mechanical stirring, and then added into the above system at -10 °C; and the obtained mixture underwent condensation polymerization reaction for 18 hours, obtaining a material containing poly(amic acid);

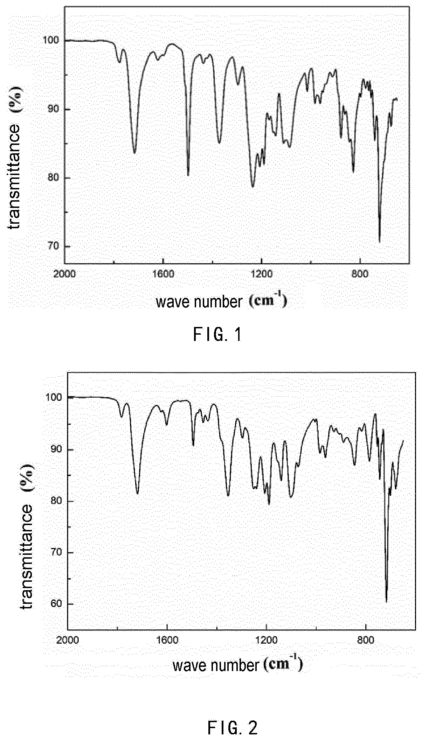

(S2) A mixture of acetic anhydride (40.836g, 0.4mol) and pyridine (31.60g, 0.4mol) was added to the material containing poly(amic acid) obtained in step (1), and underwent intramolecular dehydration at 20 °C for 24h to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-2. A Fourier transform infrared spectrometer (Thermo Nicolet 380) was used to conduct infrared test on the polyimide random copolymer. The infrared spectrum is shown in Figure 1. Infrared test shows that PI-2 has a polyimide structure. In addition, the raw materials were not detected in the remaining liquid phase after the polyimide was precipitated, indicating that all raw materials participated in the reaction.

In Figure 1, the peaks at 1775 cm⁻¹ and 1716 cm⁻¹ are respectively the symmetric stretching vibration peak and the asymmetric stretching vibration peak of the two carbonyl groups in the five-membered imine ring in polyimide, the peak at 1370 cm⁻¹ is the stretching vibration of C-N in polyimide, the peak at 721 cm⁻¹ is the deformation vibration peak of the imine ring, and the peak at 1110 cm⁻¹ is the stretching vibration peak of C-F. That is, the appearance of the above characteristic peaks indicates the successful synthesis of PI-2.

### Preparation Example 3 (Comparative)

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (16.51g, 0.05mol) and 3,3',4,4'-benzophenone tetracarboxylic dianhydride (BTDA) (16.11g, 0.05mol) were mixed homogeneously under mechanical stirring, and then added into the above system at 0 °C; and the obtained mixture underwent condensation polymerization reaction for 18 hours, obtaining a material containing poly(amic acid);
(2) A mixture of acetic anhydride (55.1286g, 0.54mol) and pyridine (42.714g, 0.54mol) was added to the material containing poly(amic acid) obtained in step (1), and underwent intramolecular dehydration at 0°C for 24h to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-3. A Fourier transform infrared spectrometer (Thermo Nicolet 380) was used to conduct infrared test on the polyimide random copolymer. The infrared spectrum is shown in Figure 2. Infrared test shows that PI-3 has a polyimide structure. In addition, the raw materials were not detected in the remaining liquid phase after the polyimide was precipitated, indicating that all raw materials participated in the reaction.

In Figure 2, the peaks at 1776cm ⁻¹ and 1715cm ⁻¹ are respectively the symmetric stretching vibration peak and the asymmetric stretching vibration peak of the two carbonyl groups in the five-membered imine ring in polyimide, the peak at 1372cm⁻¹ is the stretching vibration of C-N in the polyimide, the peak at 1255cm⁻¹ is the stretching vibration of the ether bond in the aryl ether, and the peak at 721cm⁻¹ is the deformation vibration peak of the imine ring. That is, the appearance of the above characteristic peaks indicates the successful synthesis of PI-3.

### Preparation Example 4

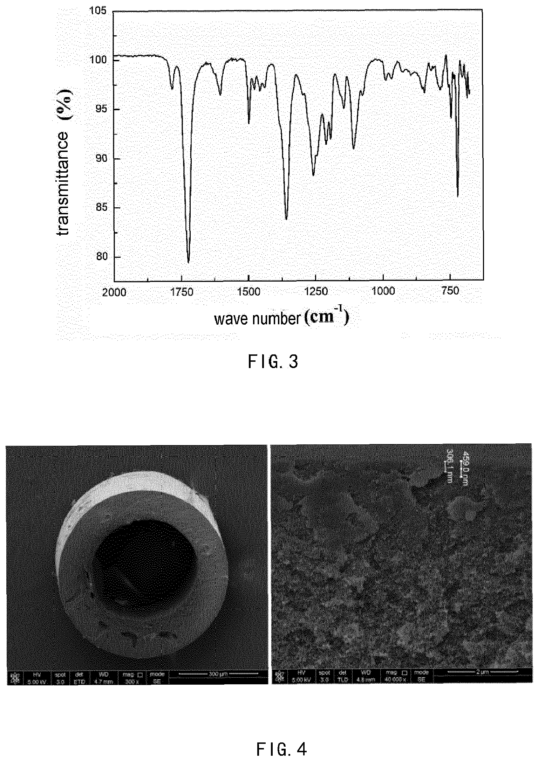

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (12.4138g, 0.04mol) and 4,4'-(hexafluoroisopropylidene) diphthalic anhydride (6FDA) (26.6544g, 0.06mol) were mixed homogeneously under mechanical stirring, and then added into the above system at 20 °C; and the obtained mixture underwent condensation polymerization reaction for 12 hours, obtaining a material containing poly(amic acid);
(2) A mixture of acetic anhydride (36.7524g, 0.36mol) and pyridine (28.4760g, 0.36mol) was added to the material containing poly(amic acid) obtained in step (1), and underwent intramolecular dehydration at 20°C for 18h to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-4. A Fourier transform infrared spectrometer (Thermo Nicolet 380) was used to conduct infrared test on the polyimide random copolymer. The infrared spectrum is shown in Figure 3. Infrared test shows that PI-4 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

In Figure 3, the peaks at 1784cm⁻¹ and 1730cm⁻¹ are respectively the symmetric stretching vibration peak and the asymmetric stretching vibration peak of the two carbonyl groups in the five-membered imine ring in polyimide, the peak at 1357cm⁻¹ is the stretching vibration of C-N in polyimide, the peak at 721cm^{- 1} is the deformation vibration peak of the imine ring, the peak at 1255cm⁻¹ is the stretching vibration of the ether bond in the aryl ether, and the peak at 1144cm⁻¹ is the stretching vibration peak of C-F. That is, the appearance of the above characteristic peaks indicates the successful synthesis of PI-4.

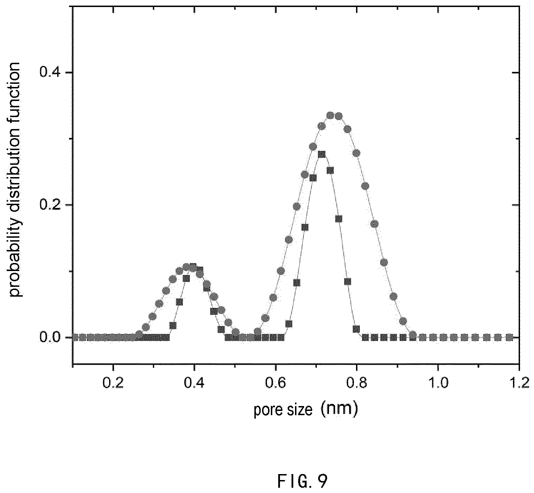

The pore size distribution of the flat homogeneous membrane prepared from the polymer of this preparation example was analyzed using positron annihilation lifetime spectroscopy (PALS). See Figure 9.

The polymer was added into NMP in a solid content of 10wt%, and stirred in a shaker at 50 °C until it was completely dissolved, obtaining a uniform and stable casting solution. The casting solution was cooled to room temperature, and was applied evenly to a surface of a clean glass plate after ultrasonic deaeration. The coated glass plate was dried in a blast oven at 70 °C for 6 hours. After removing a large amount of solvent, it was moved into a vacuum oven and dried at 120 °C for 12 hours to further remove the remaining solvent; and then it was cooled to room temperature. The glass plate with the membrane attached to it was soaked in deionized water until the membrane fell off the surface of the glass plate to obtain the membrane.

The membrane was cut to a size of approximately 15 × 15 mm and stacked to a total thickness of approximately 2 mm. Two such membrane stacks were prepared for each membrane sample. 22Na was used as the positron source, which was wrapped by two 7.5 µm Kapton foils, and was sandwiched between two membrane stacks. A fast-fast coincidence spectrometer system with a time resolution of 200 ps was used to record the positron annihilation lifetime spectrum of the membrane. The measurement system is a self-built system. Each sample was measured twice in vacuum. All PALS data were analyzed using CONTIN program.

As can be seen from Figure 9, the prepared polyimide random copolymer membrane has a bimodal pore size distribution.

### Preparation Example 5

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (0.04mol) and 4,4'-(hexafluoroisopropylidene) diphthalic anhydride (6FDA) (0.06mol) were mixed homogeneously under mechanical stirring, and then added into the above system at 50 °C; the obtained mixture underwent condensation polymerization reaction for 24h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20 °C for 16 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring , so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-5. Infrared test shows that PI-5 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

### Preparation Example 6

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (0.03mol) and 4,4'-(hexafluoroisopropylidene) diphthalic anhydride (6FDA) (0.07mol) were mixed homogeneously under mechanical stirring, and then added into the above system at 20 °C; the obtained mixture underwent condensation polymerization reaction for 12h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20°C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-6. Infrared test shows that PI-6 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

### Preparation Example 7

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (0.03mol) and 4,4'-(hexafluoroisopropylidene) diphthalic anhydride (6FDA) (0.07mol) were mixed homogeneously under mechanical stirring, and then added into the above system at 0 °C; the obtained mixture underwent condensation polymerization reaction for 12h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20 °C for 24 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-7. Infrared test shows that PI-7 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

### Preparation Example 8

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (0.02mol) and 4,4'-(hexafluoroisopropylidene) diphthalic anhydride (6FDA) (0.08mol) were mixed homogeneously under mechanical stirring, and then added into the above system at 20 °C; the obtained mixture underwent condensation polymerization reaction for 12h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20 °C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-8. Infrared test shows that PI-8 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

### Preparation Example 9

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (O.Olmol) and 4,4'-(hexafluoroisopropylidene) diphthalic anhydride (6FDA) (0.09mol) were mixed homogeneously under mechanical stirring, and then added into the above system at 20 °C; the obtained mixture underwent condensation polymerization reaction for 12h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20°C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) under stirring, so that the polyimide was precipitated to obtain polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-9. Infrared test shows that PI-9 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

### Preparation Example 10

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 4,4-oxydiphthalic anhydride (ODPA) (O.Olmol) and 4,4'-(hexafluoroisopropylidene) diphthalic anhydride (6FDA) (0.09mol) were mixed homogeneously under mechanical stirring, and then added into the above system at 0 °C; the obtained mixture underwent condensation polymerization reaction for 12h, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20 °C for 24 hours to obtain a material containing polyimide. Thereafter, 600 mL of N-methyl-2-pyrrolidone (NMP) was added to the material containing polyimide for dilution, and the above diluted material was poured into a mixed solvent of water and ethanol (500 mL : 500 mL) under stirring, so that the polyimide was precipitated to obtain polyimide, which was then rinsed (3 times) with a mixture of water and ethanol (1500mL : 1500mL), suction filtered and dried (vacuum drying at 220 °C for 24 hours; and then blast drying at 70 °C for 48 hours), obtaining a polyimide random copolymer, which was designated as PI-10. Infrared test shows that PI-10 has the structure shown in formula (I), where X is Xc, Y is Ya, and Z and Z' are both Z1. In addition, the raw materials were not detected in the remaining liquid phase after the polyimide was precipitated, indicating that all raw materials participated in the reaction.

The pore size distribution of the flat homogeneous membrane prepared from the polymer of this Preparation Example was analyzed using positron annihilation lifetime spectroscopy (PALS), as described in Preparation Example 4. See Figure 9.

### Preparation Example 11 (Comparative)

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved; 3,3',4,4'-biphenyltetracarboxylic dianhydride (BPDA) (0.02mol) and 4,4'-(hexafluoroisopropylidene) diphthalic anhydride (6FDA) (0.08mol) were mixed homogeneously under shaking conditions, and then added to the above system at -10 °C. The obtained mixture underwent condensation polymerization reaction for 18 hours, obtaining a material containing poly(amic acid);
(2) A mixture of acetic anhydride (0.4 mol) and pyridine (0.4 mol) was added to the material containing poly(amic acid) obtained in step (1), and underwent intramolecular dehydration at 20 °C for 24 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-11. Infrared test shows that PI-11 has a polyimide structure. In addition, the raw materials were not detected in the remaining liquid phase after the polyimide was precipitated, indicating that all raw materials participated in the reaction.

### Preparation Example 12 (Comparative)

(1) Under nitrogen protection, 200mL of anhydrous N-methyl-2-pyrrolidone and m-phenylenediamine (10.81g, 0.1mol) were added in sequence into a 1L three-necked flask, and stirred until the materials were completely dissolved. 3,3',4,4'-biphenyltetracarboxylic dianhydride (O.Olmol) and 4,4'-(hexafluoroisopropylidene) diphthalic anhydride (6FDA) (0.09mol) were mixed homogenously under shaking conditions, and then added to the above system at -10 °C. The obtained mixture underwent condensation polymerization reaction for 18 hours, obtaining a material containing poly(amic acid);
(2) A mixture of acetic anhydride (0.4 mol) and pyridine (0.4 mol) was added to the material containing poly(amic acid) obtained in step (1), and underwent intramolecular dehydration at 20 °C for 24 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-12. Infrared test shows that PI-12 has a polyimide structure. In addition, the raw materials were not detected in the remaining liquid phase after the polyimide was precipitated, indicating that all raw materials participated in the reaction.

### Preparation Example 13 (Comparative)

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved. Pyromellitic dianhydride (PMDA) (0.03mol) and 4,4'-(hexafluoroisopropylidene) diphthalic anhydride (6FDA) (0.07mol) were mixed homogeneously under ultrasonic conditions, and then added to the above system at 25 °C. The obtained mixture underwent condensation polymerization reaction for 12h, obtaining a material containing poly(amic acid);
(2) A mixture of acetic anhydride (0.4 mol) and pyridine (0.4 mol) was added to the material containing poly(amic acid) obtained in step (1), and underwent intramolecular dehydration at 0 °C for 18 hours to obtain a material containing polyimide. 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-13. Infrared test shows that PI-13 has a polyimide structure. In addition, the raw materials were not detected in the remaining liquid phase after the polyimide was precipitated, indicating that all raw materials participated in the reaction.

### Preparation Example 14

(1) Under nitrogen protection, 200mL anhydrous N-methyl-2-pyrrolidone and m-phenylenediamine (10.81g, 0.1mol) were added in sequence to a 1L three-necked flask, and stirred until the materials were completely dissolved. 4,4'-oxydiphthalic anhydride (0.05mol) and triptycene-based dianhydride (0.05mol) were mixed homogeneously under mechanical stirring, and then added into the above system at 20 °C; the obtained mixture underwent condensation polymerization reaction for 12 hours, obtaining a material containing poly(amic acid);
(2) A mixture of acetic anhydride (0.36 mol) and pyridine (0.36 mol) was added to the material containing poly(amic acid) obtained in step (1), and underwent intramolecular dehydration at 20°C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-14. Infrared test shows that PI-14 has the structure shown in formula (I), where X is Xc, Y is Yd, and Z and Z' are both Z1. In addition, the raw materials were not detected in the remaining liquid phase after the polyimide was precipitated, indicating that all raw materials participated in the reaction.

### Preparation Example 15

(1) Under nitrogen protection, 200mL of anhydrous N-methyl-2-pyrrolidone and pentiptycene-based diamine (0.1mol) were added in sequence into a 1L three-necked flask, and stirred until the materials were completely dissolved. 3,3',4,4'-biphenyltetracarboxylic dianhydride (0.04mol) and 3,3',4,4'- benzophenone tetracarboxylic dianhydride (0.06mol) were mixed homogeneously under mechanical stirring, and then added into the above system at 20 °C; the obtained mixture underwent condensation polymerization reaction for 12 hours to obtain a material containing poly(amic acid);
(2) A mixture of acetic anhydride (0.36 mol) and pyridine (0.36 mol) was added to the material containing poly(amic acid) obtained in step (1), and underwent intramolecular dehydration at 20°C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-15. Infrared test shows that PI-15 has the structure shown in formula (I). In addition, the raw materials were not detected in the remaining liquid phase after the polyimide was precipitated, indicating that all raw materials participated in the reaction.

### Preparation Example 16

(1) Under nitrogen protection, 200mL anhydrous N-methyl-2-pyrrolidone and pentiptycene-based diamine (0.1mol) were added in sequence to a 1L three-necked flask, and stirred until the materials were completely dissolved. 4,4'-oxydiphthalic anhydride (0.02mol) and 4,4'-(hexafluoroisopropylidene) diphthalic anhydride (0.08mol) were mixed homogeneously under ultrasonic conditions, and then added to the above system at 10 °C. The obtained mixture underwent condensation polymerization reaction for 12 hours, obtaining a material containing poly(amic acid);
(2) A mixture of acetic anhydride (0.52 mol) and pyridine (0.52 mol) was added to the material containing poly(amic acid) obtained in step (1), and underwent intramolecular dehydration at 20°C for 18 hours to obtain a material containing polyimide. Thereafter, 600mL of N-methyl-2-pyrrolidone (NMP) was added to the material containing polyimide for dilution, and the above diluted material was poured into a mixed solvent of water and ethanol (500mL : 500mL) with stirring, so that the polyimide was precipitated to obtain the polyimide, which was then rinsed (3 times) with a mixture of water and ethanol (1500mL : 1500mL), suction filtered and dried (vacuum drying at 220 °C for 24 hours; then blast drying at 70 °C for 48 hours), obtaining a polyimide random copolymer, which was designated as PI-16. Infrared test shows that PI-16 has structure 3 shown in formula (I). In addition, the raw materials were not detected in the remaining liquid phase after the polyimide was precipitated, indicating that all raw materials participated in the reaction.

### Preparation Example 17

The preparation was conducted according to Preparation Example 4, except that an equal molar amount of triptycene-based dianhydride was used instead of 4,4'-(hexafluoroisopropylidene) diphthalic anhydride (6FDA), and an equal molar amount of pentiptycene-based diamine was used instead of m-phenylenediamine. A polyimide random copolymer was prepared, which was designated as PI-17. Detailed reaction conditions are summarized in Table 1. Infrared test shows that PI-17 has the structure shown in formula (I), where X is Xc, Y is Yd, and Z and Z' are both Z3. In addition, the raw materials were not detected in the remaining liquid phase after the polyimide was precipitated, indicating that all raw materials participated in the reaction.

### Preparation Example 18

The preparation was conducted according to Preparation Example 4, except that an equal molar amount of 3,3',4,4'-benzophenone tetracarboxylic dianhydride was used instead of 4,4'-(hexafluoroisopropylidene) diphthalic anhydride and an equal molar amount of pentiptycene-based diamine was used instead of m-phenylenediamine. A polyimide random copolymer was prepared, which was designated as PI-18. Detailed reaction conditions are summarized in Table 1. Infrared test shows that PI-18 has the structure shown in formula (I). In addition, the raw materials were not detected in the remaining liquid phase after the polyimide was precipitated, indicating that all raw materials participated in the reaction.

### Preparation Example 19

The preparation was conducted according to Preparation Example 4, except that an equal molar amount of 3,3',4,4'-biphenyltetracarboxylic dianhydride was used instead of 4,4-oxydiphthalic anhydride (ODPA), and an equal molar amount of pentiptycene-based diamine was used instead of m-phenylenediamine. A polyimide random copolymer was prepared, which was designated as PI-19. Detailed reaction conditions are summarized in Table 1. Infrared test shows that PI-19 has the structure shown in formula (I). In addition, the raw materials were not detected in the remaining liquid phase after the polyimide was precipitated, indicating that all raw materials participated in the reaction.

### Preparation Example 20

The preparation was conducted according to Preparation Example 4, except that an equal molar amount of pentiptycene-based diamine was used instead of m-phenylenediamine. A polyimide random copolymer was prepared, which was designated as PI-20. Detailed reaction conditions are summarized in Table 1. Infrared test shows that PI-20 has the structure shown in formula (I), where X is Xc, Y is Ya, and Z and Z' are both Z3. In addition, the raw materials were not detected in the remaining liquid phase after the polyimide was precipitated, indicating that all raw materials participated in the reaction.

### Preparation Example 21

A 6FDA-mPDA copolymer was prepared with reference to the literature "YAMAMOTO H, MI Y, STERN S A. Structure/Permeability Relationships of Polyimide Membranes. II. Journal of Polymer Science: Part B: Polymer Physics 1990, 28: 2291-2304."

### Preparation Example 22

A 6FDA-PPDA copolymer was prepared with reference to the literature "LUO S J, LIU Q, ZHANG B H, et al. Pentiptycene-based polyimides with hierarchically controlled molecular cavity architecture for efficient membrane gas separation. J Membrane Sci 2015, 480: 20-30. "

### Preparation Example 23

4,4-oxydiphthalic anhydride (0.04mol) and 4,4-(hexafluoroisopropylidene) diphthalic anhydride (0.06mol) were used as dianhydride monomers. Under nitrogen protection, two 0.5L three-necked flasks were charged with 80mL (A) and 120mL (B) of anhydrous N-methyl-2-pyrrolidone respectively, and 0.04 mol and 0.06 mol of m-phenylenediamine were respectively added to A and B, and stirred until the materials were completely dissolved. 4,4-oxydiphthalic anhydride (ODPA) (12.4138g, 0.04mol) and 4,4'-(hexafluoroisopropylidene) diphthalic anhydride (6FDA) (26.6544g, 0.06mol) were respectively added to A and B (added to the above system at 20 °C). The obtained mixtures underwent condensation polymerization reaction for 8 hours. The solutions in the two reaction systems were transferred to a 1L three-necked flask, and the reaction was continued at 20 °C for 4 hours, obtaining a poly(amic acid) solution. A mixture of acetic anhydride (36.7524g, 0.36mol) and pyridine (28.4760g, 0.36mol) was added to the material containing poly(amic acid), and underwent intramolecular dehydration at 20°C for 18h to obtain a material containing polyimide. Thereafter, N-methyl-2-pyrrolidone (NMP) was added to the material containing polyimide for dilution, and the above diluted material was poured into a mixed solvent of water and ethanol under stirring, so that polyimide was precipitated to obtain a polyimide, which was then rinsed with a mixture of water and ethanol, suction filtrated and dried (vacuum drying at 220 °C for 24 hours; then blast drying at 70 °C for 48 hours), obtaining a polyimide block copolymer.

**Table 1**

| Preparation Example Number | dianhydri de represent ed by formula (II) | dianhydri de represent ed by formula (III) | diamine monomer | molar ratio of dianhydride represented by formula (II) to dianhydride represented by formula (III) | mixing manner of dianhydrides represented by formula (II) and formula (III) | temperature and period of condensation polymerizatio n reaction | temperature and period for intramolecular dehydration | molecular weight Mn (×10⁴ g/mol) |
|---|---|---|---|---|---|---|---|---|
| Preparation Example 1 | PMDA | 6FDA | m-PDA | 1:1 | mechanical stirring | 10°C,12h | 25°C,18h | 30.7 |
| Preparation Example 2 | BPDA | 6FDA | m-PDA | 1:1 | mechanical stirring | -10°C,18h | 20°C,24h | 31.6 |
| Preparation Example 3 | ODPA | BTDA | m-PDA | 1:1 | mechanical stirring | 0°C,18h | 0°C,24h | 28.7 |
| Preparation Example 4 | ODPA | 6FDA | m-PDA | 4:6 | mechanical stirring | 20°C,12h | 20°C,18h | 32.3 |
| Preparation Example 5 | ODPA | 6FDA | m-PDA | 4:6 | mechanical stirring | 50°C,24h | 20°C,16h | 45.1 |
| Preparation Example 6 | ODPA | 6FDA | m-PDA | 3:7 | mechanical stirring | 20°C,12h | 20°C,18h | 29.8 |
| Preparation Example 7 | ODPA | 6FDA | m-PDA | 3:7 | mechanical stirring | 0°C,12h | 20°C,24h | 30.3 |
| Preparation Example 8 | ODPA | 6FDA | m-PDA | 2:8 | mechanical stirring | 20°C,12h | 20°C,18h | 28.7 |
| Preparation Example 9 | ODPA | 6FDA | m-PDA | 1:9 | mechanical stirring | 20°C,12h | 20°C,18h | 26.9 |
| Preparation Example 10 | ODPA | 6FDA | m-PDA | 1:9 | mechanical stirring | 0°C,12h | 20°C,24h | 34.4 |
| Preparation Example 11 | BPDA | 6FDA | m-PDA | 2:8 | shaking | -10°C,18h | 20°C,24h | 29.7 |
| Preparation Example 12 | BPDA | 6FDA | m-PDA | 1:9 | shaking | -10°C,18h | 20°C,24h | 30.1 |
| Preparation Example 13 | PMDA | 6FDA | m-PDA | 3:7 | ultrasound | 25°C,12h | 20°C,18h | 26.4 |
| Preparation Example 14 | ODPA | TPDAn | m-PDA | 1:1 | mechanical stirring | 20°C,12h | 20°C,18h | 8.7 |
| Preparation Example 15 | BPDA | BTDA | PPDA | 4:6 | mechanical stirring | 20°C,12h | 20°C,18h | 7.3 |
| Preparation Example 16 | ODPA | 6FDA | PPDA | 2:8 | ultrasound | 10°C,12h | 20°C,18h | 9.2 |
| Preparation Example 17 | ODPA | TPDAn | PPDA | 4:6 | mechanical stirring | 20°C,12h | 20°C,18h | 5.3 |
| Preparation Example 18 | ODPA | BTDA | PPDA | 4:6 | mechanical stirring | 20°C,12h | 20°C,18h | 8.6 |
| Preparation Example 19 | BPDA | 6FDA | PPDA | 4:6 | mechanical stirring | 20°C,12h | 20°C,18h | 8.2 |
| Preparation Example 20 | ODPA | 6FDA | PPDA | 4:6 | mechanical stirring | 20°C,12h | 20°C,18h | 8.9 |
| Preparation Example 21 | - | 6FDA | mPDA | - | - | - | - | |
| Preparation Example 22 | - | 6FDA | PPDA | - | - | - | - | |
| Preparation Example 23 | ODPA | 6FDA | mPDA | 4:6 | - | 20°C,12h | 20°C,18h | 30.8 |

The following examples are used to illustrate the preparation of polyimide-based hollow fiber membranes.

### Hollow Fiber Membrane Preparation Example 1

(1) 30wt% of the polyimide random copolymer obtained in Preparation Example 10 above, 45wt% of NMP, 10wt% of ethanol (boiling point: 78 °C), 10wt% of THF (boiling point: 68.28 °C) and 5wt% lithium nitrate were added into a kettle with a stirring device, heated to 50 °C, and stirred under nitrogen protection (rotation speed: 600r/min) for 36 hours. After stopping stirring, the mixture was deaerated at 25 °C, -0.1MPa, and a rotation speed of 10r/min for 24 hours, and then filtered through a filter screen (pore size 100 mesh) at 50°C to obtain a casting solution.
(2) The casting solution and a bore fluid (NMP : water = 95wt% : 5wt%) were transported to a single-hole spinneret (specification: 0.6/0.4/0.2) with a metering pump at 0.8 MPa casting solution pressure and 20 Pa bore fluid pressure respectively. The bore fluid and the casting solution were extruded through the spinneret together, passed through an air gap of 10cm, and then placed in 50 °C water for solidification to obtain a polyimide-based hollow fiber membrane precursor; wherein the spinneret temperature (extrusion temperature) was 75 °C; the flow rates of the casting solution and the bore fluid into the hollow spinneret were 6mL/min and 2mL/min respectively;
(3) The polyimide hollow fiber membrane precursor obtained in step (2) was winded up by a winding machine (winding up on a cylinder with a diameter of 50cm, one circle is 157cm), and then extracted by placing into water, ethanol, and n-hexane twice each and in sequence, with an extraction time of 3 hours. Then, the extracted hollow fiber membrane was placed in a fume hood and naturally air-dried at room temperature for 12 hours to obtain a polyimide-based hollow fiber membrane. Wherein the winding speed was 1m/s.

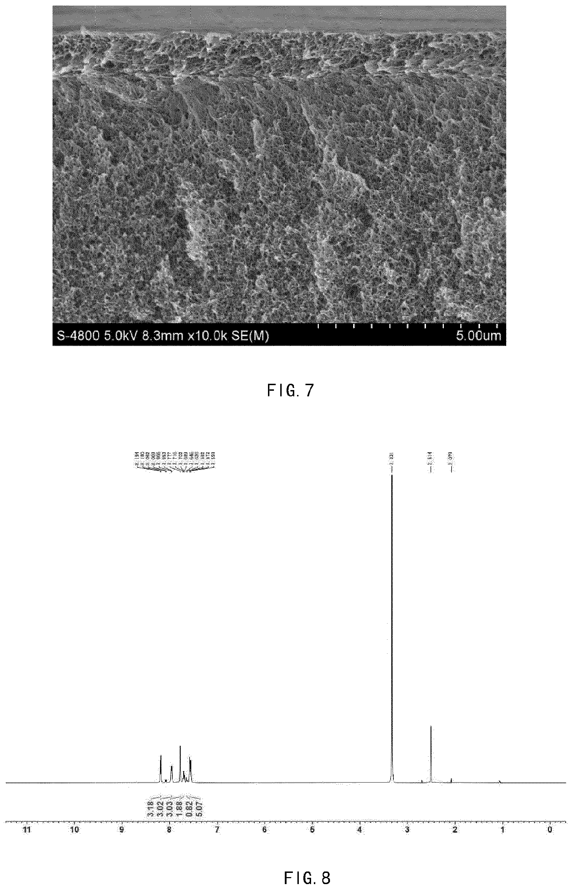

The obtained hollow fiber membrane was characterized by mercury intrusion porosimetry, and the porosity was 65.5%. The thickness of the dense layer was 150nm. Mechanical property characterization (according to GB/T1040.1-2006) results: a breaking force of the membrane filament of 6N and a breaking elongation of 50%. The membrane filament was dissolved with deuterated reagent DMSO and then analyzed by ¹H NMR spectrum; see Figure 8.

### Hollow Fiber Membrane Preparation Example 2

(1) 27.5wt% of the polyimide random copolymer obtained in the above Preparation Example 4, 48.5wt% of DMF, 10wt% of ethanol (boiling point: 78 °C), 10wt% THF (boiling point: 68.28 °C) and 4wt% lithium nitrate were added into a kettle with a stirring device, heated to 50 °C, and stirred under nitrogen protection (a rotation speed of 120r/min) for 36 hours. After stopping stirring, the mixture was deaerated at 25 °C, -0.1MPa, a rotation speed of 10r/min for 24 hours, and then filtered through a filter screen (pore size: 100 mesh) at 50 °C to obtain a casting solution.
(2) The casting solution and a bore fluid (NMP : water = 95wt% : 5wt%) were transported to a single-hole spinneret (specification: 0.6/0.4/0.2) with a metering pump at 0.8 MPa casting solution pressure and 20 Pa bore fluid pressure respectively. The bore fluid and the casting solution were extruded through the spinneret together, passed through an air gap of 5cm, and then placed in 50 °C water for solidification to obtain a polyimide-based hollow fiber membrane precursor; wherein the spinneret temperature was 70 °C; the flow rates of the casting solution and the bore fluid into the hollow spinneret were 8mL/min and 2.5mL/min respectively.
(3) The polyimide hollow fiber membrane precursor obtained in step (2) was winded up by a winding machine (winding up on a cylinder with a diameter of 50cm, one circle is 157cm), and then extracted by placing into water, ethanol, and n-hexane twice each and in sequence, with an extraction time of 3 hours. Then, the extracted hollow fiber membrane was placed in a fume hood and naturally air-dried at room temperature for 12 hours to obtain a polyimide-based hollow fiber membrane. Wherein the winding speed was 1m/s.

The obtained hollow fiber membrane was characterized by mercury intrusion porosimetry, and the porosity of the support layer was 67.5%. The thickness of the dense layer was 400nm. The electron microscope scanning image of cross-section of the hollow fiber membrane is shown in Figure 4.

### Hollow Fiber Membrane Preparation Example 3 (comparative)

(1) 25wt% of the polyimide random copolymer obtained in the above Preparation Example 11, 50wt% of NMP, 10wt% of ethanol (boiling point: 78 °C), 10wt% of THF (boiling point: 68.28 °C) and 5wt% lithium chloride were added into a kettle with a stirring device, heated to 50 °C, and stirred under nitrogen protection (rotation speed 100r/min) for 36 hours. After stopping stirring, the mixture was deaerated at 25 °C, -0.1MPa, and a rotation speed of 10r/min for 24 hours, and then filtered through a filter screen (pore size 100 mesh) at 50°C to obtain a casting solution.
(2) The casting solution and a bore fluid (NMP : water = 30wt% : 70wt%) were transported to a single-hole spinneret (specification: 0.6/0.4/0.2) with a metering pump at 0.8 MPa casting solution pressure and 20 Pa bore fluid pressure respectively. The bore fluid and the casting solution were extruded through the spinneret together, passed through an air gap of 30cm, and then placed in 50 °C water for solidification to obtain a polyimide-based hollow fiber membrane precursor; wherein the spinneret temperature was 60 °C; the flow rates of the casting solution and the bore fluid into the hollow spinneret were 6mL/min and 2mL/min respectively;
(3) The polyimide hollow fiber membrane precursor obtained in step (2) was winded up by a winding machine (winding up on a cylinder with a diameter of 50cm, one circle is 157cm), and then extracted by placing into water, ethanol, and n-hexane twice each and in sequence, with an extraction time of 3 hours. Then the extracted hollow fiber membrane was placed in a fume hood and naturally air-dried at room temperature for 12 hours to obtain a polyimide-based hollow fiber membrane. Therein, the winding speed was 1.5m/s.

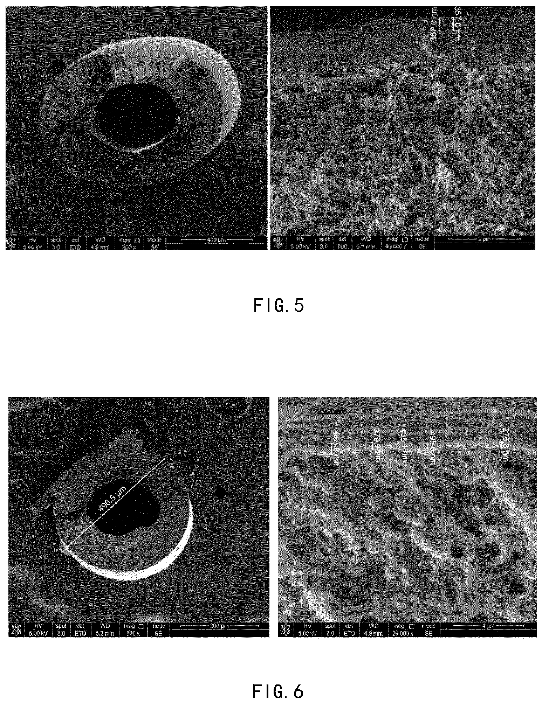

The obtained hollow fiber membrane was characterized by mercury intrusion porosimetry, and the porosity was 70%. The thickness of the dense layer was 500nm. The electron microscope scanning image of the cross-section of the hollow fiber membrane is shown in Figure 5.

### Hollow Fiber Membrane Preparation Examples 4-7

Hollow Fiber Membrane Preparation Example 1 was repeated, except that the diluent formulation and parameters of the preparation conditions (such as extrusion temperature) were changed. The detailed conditions and the thicknesses of the dense layers of the prepared hollow fiber membranes are shown in Table 2.

### Hollow Fiber Membrane Preparation Example 8

Hollow Fiber Membrane Preparation Example 1 was repeated, except that the addition proportions of additives were changed.

Wherein, the added materials were 20wt% polyimide random copolymer, 50wt% NMP, 10wt% ethanol, 10wt% THF and 10wt% lithium nitrate.

The thickness of the dense layer of the finally prepared hollow fiber membrane is shown in Table 2.

### Hollow Fiber Membrane Preparation Examples 9-11

Hollow Fiber Membrane Preparation Example 1 was repeated, except that the polyimide copolymers obtained in the above Preparation Example 4, Preparation Example 14 and Preparation Example 17 were used instead of the polyimide random copolymer obtained in Preparation Example 10.

The thicknesses of the dense layers of the finally prepared hollow fiber membranes are shown in Table 2.

### Hollow Fiber Membrane Preparation Example 12

Hollow Fiber Membrane Preparation Example 1 was repeated, except that the diluent formulation and parameters of the preparation conditions (such as extrusion temperature) were changed.

The detailed conditions and the thickness of the dense layer of the prepared hollow fiber membrane are shown in Table 2. The electron microscope scanning image of the cross-section of the hollow fiber membrane is shown in Figure 6.

### Hollow Fiber Membrane Preparation Example 13

(1) 30wt% of the polyimide random copolymer obtained in the above Preparation Example 10, 45wt% of NMP, 12wt% of ethanol (boiling point: 78 °C), 12wt% of THF (boiling point: 68.28 °C) and 1wt% lithium nitrate were added into a kettle with a stirring device, heated to 50 °C, and stirred under nitrogen protection (rotation speed 60r/min) for 36 hours. After stopping stirring, the mixture was deaerated at 25 °C, -0.1MPa, and a rotation speed of 3r/min for 24 hours, and then filtered through a filter screen(pore size 100 mesh) at 50°C to obtain a casting solution.
(2) The casting solution and a bore fluid (NMP : water = 70wt% : 30wt%) were transported to a single-hole spinneret (specification: 0.6/0.4/0.2) with a metering pump at 1.8 MPa casting solution pressure and 120 Pa bore fluid pressure respectively. The bore fluid and the casting solution were extruded through the spinneret together, passed through an air gap of 15 cm, and then placed in 50 °C water for solidification to obtain a polyimide-based hollow fiber membrane precursor; wherein, the spinneret temperature (extrusion temperature) was 60 °C; the flow rates of the casting solution and the bore fluid into the hollow spinneret were 6mL/min and 2mL/min respectively;
(3) The polyimide hollow fiber membrane precursor obtained in step (2) was winded up by a winding machine (winding up on a cylinder with a diameter of 50cm, one circle is 157cm), and then extracted by placing into water, ethanol, and n-hexane twice each and in sequence, with an extraction time of 3 hours. Then, the extracted hollow fiber membrane was placed in a fume hood and naturally air-dried at room temperature for 12 hours to obtain a polyimide-based hollow fiber membrane. Wherein, the winding speed was 1m/s.

### Hollow Fiber Membrane Preparation Example 14

(1) 30wt% of the polyimide random copolymer obtained in the above Preparation Example 10, 45wt% of NMP, 12.5wt% of ethanol (boiling point: 78 °C), and 12.5wt% of THF (boiling point: 68.28 °C) were added into a kettle with a stirring device, heated to 50 °C, and stirred under nitrogen protection (rotation speed: 60r/min) for 36 hours. After stopping stirring, the mixture was deaerated at 25 °C, -0.1MPa, a rotation speed of 3r/min for 24 hours, and then filtered through a filter screen (pore size: 100 mesh) at 50 °C to obtain a casting solution;
(2) The casting solution and a bore fluid (NMP : water = 70wt% : 30wt%) were transported to a single-hole spinneret (specification: 0.6/0.4/0.2) with a metering pump at 1.8 MPa casting solution pressure and 120 Pa bore fluid pressure respectively. The bore fluid and the casting solution were extruded through the spinneret together, passed through an air gap of 15 cm, and then placed in 50 °C water for solidification to obtain a polyimide-based hollow fiber membrane precursor; wherein, the spinneret temperature (extrusion temperature) was 65 °C; the flow rates of the casting solution and the bore fluid into the hollow spinneret were 8mL/min and 2.5mL/min respectively;
(3) The polyimide hollow fiber membrane precursor obtained in step (2) was winded up by a winding machine (winding up on a cylinder with a diameter of 50cm, one circle is 157cm), and then extracted by placing into water, ethanol, and n-hexane twice each and in sequence, with an extraction time of 3 hours. Then, the extracted hollow fiber membrane was placed in a fume hood and naturally air-dried at room temperature for 12 hours to obtain a polyimide-based hollow fiber membrane. Wherein, the winding speed was 1m/s.

### Hollow Fiber Membrane Preparation Examples 15-16 (comparative)

Hollow Fiber Membrane Preparation Example 1 was repeated, except that the polyimide copolymers obtained in the above Preparation Example 11 and Preparation Example 13 were used instead of the polyimide random copolymer obtained in Preparation Example 10, and the conditions and parameter were adjusted.

The detailed conditions and the thickness of the dense layer of the prepared hollow fiber membrane are shown in Table 2.

### Hollow Fiber Membrane Preparation Examples 17-18

Hollow Fiber Membrane Preparation Example 14 was repeated, except that the polyimide copolymers obtained in the above Preparation Example 16 and Preparation Example 20 were used instead of the polyimide random copolymer obtained in Preparation Example 10, and the conditions and parameters were adjusted.

The detailed conditions and the thickness of the dense layer of the prepared hollow fiber membrane are shown in Table 2.

### Comparative Hollow Fiber Membrane Preparation Example S2

Hollow Fiber Membrane Preparation Example 1 was repeated, except that THF was not added in the process of preparing the casting solution, wherein the materials added were 25wt% polyimide random copolymer, 50wt% NMP, 20wt% ethanol and 5wt% lithium nitrate.

Finally, the electron microscope scanning image of the cross section of the prepared hollow fiber membrane is shown in Figure 7. It can be seen that the hollow fiber membrane prepared in this comparative example had a porous structure and an effective separation skin layer (dense layer) was not formed.

### Comparative Hollow Fiber Membrane Preparation Example S3

Hollow Fiber Membrane Preparation Example 1 was repeated, except that NMP was not added in the process of preparing the casting solution, wherein the materials added were 30wt% polyimide random copolymer, 28wt% ethanol, 28wt% THF and 14wt% lithium nitrate.

Finally, the prepared hollow fiber membrane broke and was not spinnable.

### Comparative Hollow Fiber Membrane Preparation Example S4

Hollow Fiber Membrane Preparation Example 1 was repeated except that the extrusion was performed at 100 °C.

Finally, the prepared polyimide hollow fiber membrane had poor membrane-forming property and an effective separation skin layer was not formed.

In Table 2, "solvent 1" represents good solvent for polyimide, "solvent 2" represents first poor solvent for polyimide, and "solvent 3" represents second poor solvent for polyimide; "thickness of dense layer" represents the thickness of the dense layer of the polyimide-based hollow fiber membrane; "gap" represents the air gap during the preparation process of the hollow fiber membrane.

**Table 2**

| Number | Polymer | Diluent | | | | Extrusion temperature (°C) | thickness of dense layer (nm) | Gap (cm) |
|---|---|---|---|---|---|---|---|---|
| | | Solvent 1 | Solvent 2 | Solvent 3 | weight ratio | | | |
| Hollow Fiber Membrane Preparation Example 1 | Preparation Example 10 | NMP | ethanol | THF | 1:0.222:0.222 | 75 | 150 | 10 |
| Hollow Fiber Membrane Preparation Example 2 | Preparation Example 4 | DMF | ethanol | THF | 1:0.206:0.206 | 70 | 400 | 5 |
| Hollow Fiber Membrane Preparation Example 3 | Preparation Example 11 | NMP | ethanol | THF | 1:0.2:0.2 | 60 | 500 | 30 |
| Hollow Fiber Membrane Preparation Example 4 | Preparation Example 10 | NMP | ethanol | THF | 1:0.15:0.15 | 75 | 800 | 30 |
| Hollow Fiber Membrane Preparation Example 5 | Preparation Example 10 | NMP | ethanol | THF | 1:0.3:0.3 | 75 | 50 | 2 |
| Hollow Fiber Membrane Preparation Example 6 | Preparation Example 10 | NMP | ethanol | THF | 1:0.222:0.222 | 50 | 180 | 20 |
| Hollow Fiber Membrane Preparation Example 7 | Preparation Example 10 | NMP | water | THF | 1:0.002:0.222 | 75 | 160 | 5 |
| Hollow Fiber Membrane Preparation Example 8 | Preparation Example 10 | NMP | ethanol | THF | 1:0.2:0.2 | 75 | 135 | 10 |
| Hollow Fiber Membrane Preparation Example 9 | Preparation Example 4 | NMP | ethanol | THF | 1:0.222:0.222 | 75 | 178 | 10 |
| Hollow Fiber Membrane Preparation Example 10 | Preparation Example 14 | NMP | ethanol | THF | 1:0.222:0.222 | 75 | 140 | 10 |
| Hollow Fiber Membrane Preparation Example 11 | Preparation Example 17 | NMP | ethanol | THF | 1:0.222:0.222 | 75 | 130 | 10 |
| Hollow Fiber Membrane Preparation Example 12 | Preparation Example 10 | NMP | ethanol | THF | 1:0.222:0.222 | 75 | 500 | 20 |
| Hollow Fiber Membrane Preparation Example 13 | Preparation Example 10 | NMP | ethanol | THF | 1:0.266:0.266 | 60 | 400 | 15 |
| Hollow Fiber Membrane Preparation Example 14 | Preparation Example 10 | NMP | ethanol | THF | 1:0.277:0.277 | 60 | 450 | 15 |
| Hollow Fiber Membrane Preparation Example 15 | Preparation Example 11 | NMP | ethanol | THF | 1:0.222:0.222 | 75 | 150 | 10 |
| Hollow Fiber Membrane Preparation Example 16 | Preparation Example 13 | NMP | ethanol | THF | 1:0.222:0.222 | 75 | 150 | 10 |
| Hollow Fiber Membrane Preparation Example 17 | Preparation Example 16 | NMP | ethanol | THF | 1:0.277:0.277 | 60 | 350 | 15 |
| Hollow Fiber Membrane Preparation Example 18 | Preparation Example 20 | NMP | ethanol | THF | 1:0.277:0.277 | 60 | 350 | 15 |
| E1 | | NMP | ethanol | THF | 1:0.222:0.222 | 65 | - | |

### Test Example 1

The hollow fiber membranes prepared in the above Hollow Fiber Membrane Preparation Examples were subjected to a gas separation performance test.

Test method for permeation rate (unit GPU): the gas flow rate through a membrane per unit time per unit membrane area under a pressure difference of 0.1MPa at 20 °C was tested. The separation coefficient α is dimensionless and is used to characterize the selective permeability of gas components in a membrane. The separation coefficient is the ratio of the permeation rates of two gases in the membrane. The test results are shown in Table 3. Wherein, 1GPU = 10⁻⁶cm³(STP)/(cm²·s·cmHg).

The hollow fiber membrane (E1) prepared with a commercially available polyimide material Torlon 4000 TF was also tested for gas separation performance in the present invention. The test results are shown in Table 3.

The preparation of E1: Hollow Fiber Membrane Preparation Example 1 was repeated, except that a commercially available polyimide material Torlon 4000 TF was used to obtain the polyimide hollow fiber membrane (E1).

**Table 3**

| Number | Permeation rate (GPU) | | | | | | Separation coefficient | | | | | | |
|---|---|---|---|---|---|---|---|---|---|---|---|---|---|
| | He | H₂ | N₂ | O₂ | CH₄ | CO₂ | H₂/N₂ | H₂/CH₄ | He/N₂ | He/CH₄ | O₂/N₂ | CO₂/N₂ | CO₂/CH₄ |
| 1 | 310 | 295 | 3.16 | 21 | 1.38 | 106 | 93.35 | 213.77 | 98.10 | 224.64 | 6.65 | 33.54 | 76.81 |
| 2 | 215 | 192 | 2.1 | 14.2 | 0.92 | 82 | 91.43 | 208.70 | 102.38 | 233.70 | 6.76 | 39.05 | 89.13 |
| 3 | 165 | 155 | 1.8 | 12.5 | 0.8 | 76 | 86.11 | 193.75 | 91.67 | 206.25 | 6.94 | 42.22 | 95.00 |
| 4 | 142 | 139 | 1.5 | 11 | 0.7 | 53 | 92.67 | 198.57 | 94.67 | 202.86 | 7.33 | 35.33 | 75.71 |
| 5 | 406 | 390 | 4.4 | 31 | 1.8 | 132 | 88.64 | 216.67 | 92.27 | 225.56 | 7.05 | 30.00 | 73.33 |
| 6 | 270 | 253 | 2.5 | 15 | 1.03 | 98 | 101.20 | 245.63 | 108.00 | 262.14 | 6.00 | 39.20 | 95.15 |
| 7 | 295 | 276 | 3.1 | 18 | 1.32 | 102 | 89.03 | 209.09 | 95.16 | 223.48 | 5.81 | 32.90 | 77.27 |
| 8 | 368 | 354 | 3.9 | 26 | 1.68 | 119 | 90.77 | 210.71 | 94.36 | 219.05 | 6.67 | 30.51 | 70.83 |
| 9 | 282 | 271 | 2.8 | 16 | 1.16 | 101.9 | 96.79 | 233.62 | 100.71 | 243.10 | 5.71 | 36.39 | 87.84 |
| 10 | 367 | 352 | 3.6 | 24 | 1.46 | 117 | 97.78 | 241.10 | 101.94 | 251.37 | 6.67 | 32.50 | 80.14 |
| 11 | 386 | 375 | 4.1 | 29 | 1.72 | 121 | 91.46 | 218.02 | 94.15 | 224.42 | 7.07 | 29.51 | 70.35 |
| 12 | 225 | 204 | 1.9 | 18 | 0.96 | 75 | 107.37 | 212.50 | 118.42 | 234.38 | 9.47 | 39.47 | 78.13 |
| 13 | 281 | 259 | 1.82 | 20.5 | 1.22 | 77 | 142.31 | 212.30 | 154.40 | 230.33 | 11.26 | 42.31 | 63.11 |
| 14 | 254 | 221 | 1.63 | 24.8 | 1.36 | 69 | 135.58 | 162.50 | 155.83 | 186.76 | 15.21 | 42.33 | 50.74 |
| 15 | 320 | 316 | 8.14 | 36.5 | 7.11 | 158 | 38.82 | 44.44 | 39.31 | 45.01 | 4.48 | 19.41 | 22.22 |
| 16 | 389 | 339 | 5.58 | 36.9 | 5.98 | 114 | 60.75 | 56.69 | 69.71 | 65.05 | 6.61 | 20.43 | 19.06 |
| 17 | 302 | 286 | 2.4 | 31 | 1.44 | 70 | 119.17 | 198.61 | 125.83 | 209.72 | 12.92 | 29.17 | 48.61 |
| 18 | 306 | 269 | 2.5 | 29 | 1.53 | 66 | 107.60 | 175.82 | 122.40 | 200.00 | 11.60 | 26.40 | 43.14 |
| El | 120 | 112 | 1.6 | 15.2 | 2.0 | 13.0 | 70.0 | 56.0 | 75.0 | 60.0 | 9.5 | 8.1 | 6.5 |

It can be seen that the polyimide hollow fiber membrane prepared from the commercially available polyimide material is quite different from the polyimide hollow fiber membrane prepared in Hollow Fiber Membrane Preparation Example 1. The tested mechanical properties were as follows: membrane filaments breaking force 2.0N, and elongation at break 9%. It can be seen that the mechanical properties of the polyimide hollow fiber membrane prepared in Hollow Fiber Membrane Preparation Example 1 are significantly better than those of the hollow fiber membrane prepared from the commercially available polyimide material.

The process of purifying helium gas was illustrated by the following examples.

### Example 1

Natural gas produced from a gas field was subjected to multi-stage flash evaporation to obtain a feed gas, wherein the volume proportion of helium in the feed gas was 8.5% and other gas components included: methane with a volume proportion of 35%, nitrogen with a volume proportion of 37.3%, hydrogen with a volume proportion of 2.1%, carbon dioxide with a volume proportion of 7.5%, water with a volume proportion of 0.1%, and oxygen with a volume proportion of 9.5%.

The feed gas (space velocity of 200 m³/m³·h) was passed through a catalytic dehydrogenation unit, wherein Pt was used as the catalyst in the catalytic dehydrogenation device, the temperature of catalytic oxidation reaction was 110 °C and the volume proportion of oxygen was maintained greater than or equal to 8%. The gas from the outlet of the catalytic dehydrogenation device was cooled to 95 °C by heat exchange and then sent to an adsorption device (alkaline adsorption with soda lime as the adsorbent) to remove water vapor and carbon dioxide gas. Thereafter, the remaining gas in the feed gas was subjected to compression and heat exchange, and then the first-stage and second-stage polymer membrane separations were carried out by passing the remaining gas through membrane modules of the polyimide hollow fiber membrane prepared in the above Hollow Fiber Membrane Preparation Example 4 at a pressure of 5MPa and a temperature of 90 °C, to obtain a crude helium gas. Then the crude helium gas was subjected to compression and heat exchange, and was passed through a palladium-copper alloy membrane (the thickness of the alloy membrane is 20 µm, PdAM-600 purchased from Yiwu Ruisheng New Material Technology Co., Ltd.) separation unit at a pressure of 10MPa and a temperature of 400 °C to perform deep dehydrogenation to obtain 5N grade ultrapure helium gas. Wherein, the volume proportions of gas components after each stage of separation are shown in Table 4.

**Table 4**

| No.\Composition in mol% | Helium | Methane | Nitrogen | CO₂ | Hydrogen | Water | Oxygen |
|---|---|---|---|---|---|---|---|
| Feed gas | 8.5 | 35 | 37.3 | 7.5 | 2.1 | 0.1 | 9.5 |
| Catalytic Oxidation | 9 | 36.6 | 39.5 | 9.2 | 0.005 | 1.7 | 4 |
| Alkaline adsorption | 12 | 39 | 40.43 | 0 | 0.018 | 0.0001 | 5.41 |
| First-stage polymer membrane separation | 95.1 | 0.95 | 3.89 | 0 | 0.04 | 0 | 1 |
| Second-stage polymer membrane separation | 99.933 | 0.0002 | 0.015 | 0 | 0.05 | 0 | 0 |
| Palladium copper alloy membrane separation | 99.999 | 0.0002 | 0 | 0 | 0.00016 | 0 | 0 |

### Example 2

The feed gas was boil off gas (BOG) from a liquefied natural gas station, in which the volume proportion of helium was 15.73%. Other gas components included: methane with a volume proportion of 19.9%, nitrogen with a volume proportion of 57.7%, hydrogen with a volume proportion of 6.62 %, and oxygen with sum of the volume proportions of 0.05%.

The feed gas (space velocity of 600 m³/m³·h) was passed through a catalytic dehydrogenation unit, wherein Ru was used as the catalyst in the catalytic dehydrogenation device, the temperature of the catalytic oxidation reaction was 90 °C and the volume proportion of oxygen was maintained greater than or equal to 8%. The gas from the outlet of the catalytic dehydrogenation device was cooled to 95 °C by heat exchange and then sent to an adsorption device (alkaline adsorption with soda lime as the adsorbent) to remove water vapor. Thereafter, the remaining gas in the feed gas was subjected to compression and heat exchange, and then the first-stage and second-stage polymer membrane separations were carried out by passing the remaining gas through membrane modules of the polyimide hollow fiber membrane prepared in the above Hollow Fiber Membrane Preparation Example 2 at a pressure of 3MPa and a temperature of 90 °C to obtain a crude helium gas. Then the crude helium gas was subjected to compression and heat exchange, and was passed through a palladium-gold alloy membrane (the thickness of the alloy membrane is 6µm, UHP-2L purchased from Nanjing Gaoqian Functional Materials Technology Co., Ltd.) separation unit at a pressure of 15 MPa and a temperature of 277 °C to perform deep dehydrogenation to obtain 5N grade ultrapure helium. Wherein, the volume proportions of gas components after each stage of separation are shown in Table 5.

**Table 5**

| No.\Composition in mol% | Helium | Methane | Nitrogen | CO₂ | Hydrogen | Water | Oxygen |
|---|---|---|---|---|---|---|---|
| Feed gas | 15.73 | 19.9 | 57.7 | 0 | 6.62 | 0 | 0.05 |
| Catalytic oxidation | 14.72 | 18.63 | 54.01 | 0.001 | 0.02 | 9.71 | 2.92 |
| Alkaline adsorption | 16.31 | 20.63 | 59.81 | 0 | 0.02 | 0.00009 | 3.24 |
| First-stage polymer membrane separation | 99.37 | 0.25 | 0.22 | 0 | 0.12 | 0 | 0.04 |
| Second-stage polymer membrane separation | 99.88 | 0.0005 | 0.0001 | 0 | 0.12 | 0 | 0.0001 |
| Palladium-gold alloy membrane separation | 99.999 | 0.0005 | 0.0001 | 0 | 0.0003 | 0 | 0.0001 |

### Example 3

Feed gas was obtained after pretreatment (two-stage flash evaporation) of natural gas produced in a gas field, in which the volume proportion of helium in the feed gas was 19.7%. Other gas components included: methane with a volume proportion of 15.9%, nitrogen with a volume proportion of 53.7% nitrogen, hydrogen with a volume proportion of 0.05%, carbon dioxide with a volume proportion of 10.65%, water with a volume proportion of 2.5% water and oxygen with a volume proportion of 2.15%.

The feed gas (space velocity of 520m³/m³·h) was passed through a catalytic dehydrogenation unit, wherein Pd was used as the catalyst in the catalytic dehydrogenation device, the temperature of the catalytic oxidation reaction was 120 °C and the volume proportion of oxygen was maintained greater than or equal to 8%. The gas from the outlet of the catalytic dehydrogenation device was cooled to 80 °C by heat exchange and then sent to an adsorption device (alkaline adsorption with soda lime as the adsorbent) to remove water vapor and carbon dioxide gas. Thereafter, the remaining gas in the feed gas was subjected to compression and heat exchange, and then the first-stage, second-stage, third-stage and fourth-stage polymer membrane separations were carried out by passing the remaining gas through the membrane modules of the polyimide hollow fiber membrane prepared in the above Hollow Fiber Membrane Preparation Example 6 at a pressure of 5MPa and a temperature of 85 °C to obtain a crude helium gas. Then the crude helium gas was subjected to compression and heat exchange, and was passed through a palladium-gold alloy membrane (thickness 10µm, UHP-500 purchased from Nanjing Gaoqian Functional Materials Technology Co., Ltd.) separation unit at a pressure of 4 MPa and a temperature of 304 °C to perform deep dehydrogenation to obtain 5N grade ultrapure helium gas. Wherein, the volume proportions of gas components after each stage of separation are shown in Table 6.

**Table 6**

| No.\Composition in mol% | Helium | Methane | Nitrogen | CO₂ | Hydrogen | Water | Oxygen |
|---|---|---|---|---|---|---|---|
| Feed gas | 19.7 | 15.9 | 53.7 | 6 | 0.05 | 2.5 | 2.15 |
| Catalytic oxidation | 19.32 | 15.60 | 52.67 | 5.89 | 0.0002 | 2.56 | 3.96 |
| Alkaline adsorption | 21.11 | 17.03 | 57.53 | 0.00001 | 0.0003 | 0.0001 | 4.33 |
| First-stage polymer membrane separation | 95.63 | 0.39 | 2.61 | 0.00001 | 0.001 | 0 | 1.37 |
| Second-stage polymer membrane separation | 99.87 | 0.002 | 0.03 | 0 | 0.001 | 0 | 0.1 |
| Third-stage polymer membrane separation | 99.99 | 0.00001 | 0 | 0 | 0.001 | 0 | 0.01 |
| Fourth-stage polymer membrane separation | 99.9985 | 0 | 0 | 0 | 0.001 | 0 | 0.0005 |
| Palladium-gold alloy membrane separation | 99.9995 | 0 | 0 | 0 | 0 | 0 | 0.0005 |

### Example 4

The volume proportion of helium in a helium-rich hydrogen-containing gas was 49.33%, and other gas components included: hydrogen with a volume proportion of 20.09%, carbon dioxide with a volume proportion of 29.15%, and water with a volume proportion of 1.43%.

The feed gas (space velocity of 150m³/m³·h) was passed through a catalytic dehydrogenation unit, in which Pt was used as the catalyst in the catalytic dehydrogenation device, the temperature of the catalytic oxidation reaction was 120 °C, and the volume proportion of oxygen was maintained to be greater than or equal to 8%. The gas from the outlet of the catalytic dehydrogenation device was cooled to 90 °C by heat exchange and then sent to an adsorption unit (alkaline adsorption with soda lime as the adsorbent) to remove water vapor and carbon dioxide gas. Thereafter, the remaining gas in the feed gas was subjected to compression and heat exchange, and then polymer membrane separation was carried out by passing the remaining gas through the membrane module of the polyimide hollow fiber membrane prepared in the above Hollow Fiber Membrane Preparation Example 10 at a pressure of 2MPa and a temperature of 50 °C to obtain a crude helium gas. Then the crude helium gas was subjected to compression and heat exchange, and then was passed through a palladium-silver alloy membrane (thickness 12µm, PdAM-800 purchased from Yiwu Ruisheng New Material Technology Co., Ltd.) separation unit at a pressure of 22MPa and a temperature of 489 °C to perform deep dehydrogenation to obtain 5N grade ultrapure helium gas. Wherein, the volume proportions of gas components after each stage of separation are shown in Table 7.

**Table 7**

| No.\Composition in mol% | Helium | CO₂ | Hydrogen | Water | Oxygen |
|---|---|---|---|---|---|
| Feed gas | 49.33 | 29.15 | 20.09 | 1.43 | 0 |
| Catalytic oxidation | 50.43 | 29.80 | 0.04 | 19.73 | 0.003 |
| Alkaline adsorption | 99.91 | 0.0001 | 0.08 | 0.001 | 0.006 |
| polymer membrane separation | 99.92 | 0.00002 | 0.08 | 0 | 0.0004 |
| Palladium silver alloy membrane separation | 99.999 | 0.00002 | 0.0003 | 0 | 0.0004 |

### Example 5

Example 5 was carried out in the same manner as in Example 1, except that membrane modules of the polyimide hollow fiber membrane prepared in the above Hollow Fiber Membrane Preparation Example 7 was used for polymer membrane separation. Wherein, the volume proportions of gas components after each stage of separation are shown in Table 8.

**Table 8**

| No.\Composition in mol% | Helium | Methane | Nitrogen | CO₂ | Hydrogen | Water | Oxygen |
|---|---|---|---|---|---|---|---|
| Feed gas | 8.5 | 35 | 37.3 | 7.5 | 2.1 | 0.1 | 8.5 |
| Catalytic oxidation | 8.96 | 36.89 | 39.31 | 7.90 | 0.02 | 2.24 | 4.68 |
| Alkaline adsorption | 9.97 | 41.05 | 43.75 | 0.00001 | 0.02 | 0.001 | 5.21 |
| First-stage polymer membrane separation | 99.38 | 0.15 | 0.31 | 0.00001 | 0.09 | 0 | 0.07 |
| Second-stage polymer membrane separation | 99.96 | 0.0001 | 0.0002 | 0 | 0.04 | 0 | 0.0001 |
| Palladium copper alloy membrane separation | 99.999 | 0.0001 | 0.0002 | 0 | 0.0003 | 0 | 0.0001 |

### Example 6

Example 6 was carried out in the same manner as in Example 1, except that membrane modules of the polyimide hollow fiber membrane prepared in the above Hollow Fiber Membrane Preparation Example 1 was used for polymer membrane separation. Wherein, the volume proportions of gas components after each stage of separation are shown in Table 9.

**Table 9**

| No.\Composition in mol% | Helium | Methane | Nitrogen | CO₂ | Hydrogen | Water | Oxygen |
|---|---|---|---|---|---|---|---|
| Feed gas | 8.5 | 35 | 37.3 | 7.5 | 2.1 | 0.1 | 8.5 |
| Catalytic oxidation | 9.07 | 37.34 | 39.79 | 8.00 | 0.00 | 2.37 | 3.43 |
| Alkaline adsorption | 10.12 | 41.66 | 44.39 | 0.00001 | 0.01 | 0.001 | 3.83 |
| First-stage polymer membrane separation | 99.47 | 0.15 | 0.31 | 0.00001 | 0.02 | 0 | 0.05 |
| Second-stage polymer membrane separation | 99.99 | 0.0001 | 0.0002 | 0 | 0.01 | 0 | 0.0001 |
| Palladium copper alloy membrane separation | 99.9996 | 0.0001 | 0.0002 | 0 | 0.00005 | 0 | 0.0001 |

### Comparative Example 1

This Comparative Example 1 was carried out in the same manner as in Example 3, except that a catalytic oxidation device was not provided. Wherein, the volume proportions of gas components after each stage of separation are shown in Table 10.

**Table 10**

| No.\Composition in mol% | Helium | Methane | Nitrogen | CO₂ | Hydrogen | Water | Oxygen |
|---|---|---|---|---|---|---|---|
| Feed gas | 19.7 | 15.9 | 53.7 | 6 | 0.05 | 2.5 | 2.15 |
| Alkaline adsorption | 21.53 | 17.38 | 58.69 | 0.00001 | 0.05 | 0.000 | 2.35 |
| First-stage polymer membrane separation | 92.79 | 3.74 | 2.53 | 0.00002 | 0.22 | 0 | 0.71 |
| Second-stage polymer membrane separation | 99.49 | 0.20 | 0.03 | 0 | 0.23 | 0 | 0.05 |
| Third-stage polymer membrane separation | 99.77 | 0.01 | 0.0003 | 0 | 0.22 | 0 | 0.004 |
| Fourth-stage polymer membrane separation | 99.79 | 0.0005 | 0 | 0 | 0.21 | 0 | 0.0003 |
| Palladium-gold alloy membrane separation | 99.998 | 0.0005 | 0 | 0 | 0.001 | 0 | 0.0003 |

### Comparative Example 2

This Comparative Example 2 was carried out in the same manner as in Example 3, except that the polymer membrane separation unit was not provided for separation. Wherein, the volume proportions of gas components after each stage of separation are shown in Table 11.

**Table 11**

| No.\Composition in mol% | Helium | Methane | Nitrogen | CO₂ | Hydrogen | Water | Oxygen |
|---|---|---|---|---|---|---|---|
| Feed gas | 19.7 | 15.9 | 53.7 | 6 | 0.05 | 2.5 | 2.15 |
| Catalytic oxidation | 19.50 | 15.74 | 53.15 | 5.939 | 0.0002 | 2.557 | 3.11 |
| Alkaline adsorption | 21.31 | 17.20 | 58.09 | 0 | 0.0002 | 0.001 | 3.4 |
| Palladium-gold alloy membrane separation | 21.31 | 17.20 | 58.09 | 0 | 0 | 0.001 | 3.4 |

### Comparative Example 3

This Comparative Example 3 was carried out in the same manner as in Example 3, except that the order of the catalytic dehydrogenation unit and the polymer membrane separation unit was interchanged. Wherein, the volume proportions of gas components after each stage of separation are shown in Table 12.

**Table 12**

| No.\Composition in mol% | Helium | Methane | Nitrogen | CO₂ | Hydrogen | Water | Oxygen |
|---|---|---|---|---|---|---|---|
| Feed gas | 19.7 | 15.9 | 53.7 | 6 | 0.05 | 2.5 | 2.15 |
| First-stage polymer membrane separation | 83.90 | 3.39 | 2.29 | 9.58 | 0.20 | 0 | 0.64 |
| Second-stage polymer membrane separation | 95.42 | 0.19 | 0.03 | 4.09 | 0.22 | 0 | 0.05 |
| Third-stage polymer membrane separation | 98.20 | 0.01 | 0.0003 | 1.58 | 0.21 | 0 | 0.004 |
| Fourth-stage polymer membrane separation | 99.20 | 0.0005 | 0 | 0.60 | 0.21 | 0 | 0.0003 |
| Catalytic oxidation | 95.30 | 0.0005 | 0 | 0.57 | 0.0006 | 0.17 | 3.96 |
| Alkaline adsorption | 96.01 | 0.0005 | 0 | 0 | 0.0006 | 0.00007 | 3.99 |
| Palladium-gold alloy membrane separation | 96.01 | 0.0005 | 0 | 0 | 0.00004 | 0.00007 | 3.99 |

The preferred embodiments of the present invention have been described in detail above, but the present invention is not limited thereto. Many simple modifications can be made to the technical solutions of the present invention within the scopes of the technical concepts of the present invention, including the combinations of various technical features in any other suitable manners. These simple modifications and combinations should also be deemed as the disclosed contents of the present invention, and all of them are covered by the protection scope of the present invention.

The foregoing description of the embodiments has been presented for purposes of illustration and description. It is not intended to be exhaustive or to limit the disclosure. Individual elements or features of a particular embodiment are generally not limited to that particular embodiment, but, where applicable, are interchangeable and can be used in selected embodiments even if not expressly shown or described. It can also be changed in many ways. Such changes are not considered as a deviation from the present disclosure, and all such modifications are intended to be included within the scope of the present disclosure.

## Claims

1. A polyimide random copolymer, **characterized in that** the copolymer has a structure represented by formula (I): 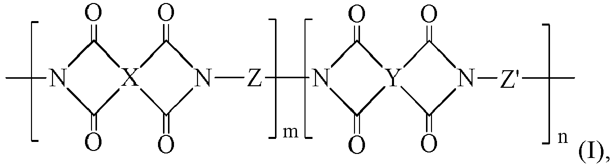
in formula (I), m and n are each independently an integer from 10 to 2000;
X is any one selected from the group consisting of formulas (X3) and (X4); 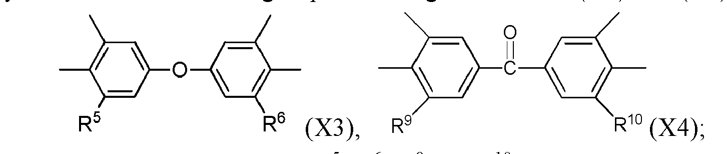
in formula (X3) and formula (X4), R⁵, R⁶, R⁹ and R¹⁰ are each independently H, an optionally substituted C1-C4 alkyl group, or an optionally substituted C6-C10 aryl group;
Y is any one selected from the group consisting of formulas (Y1), (Y3), (Y4) and iptycene-based structures; 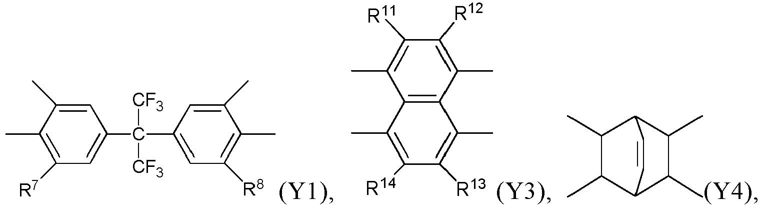
in formulas (Y1) and (Y3), R⁷, R⁸, R¹¹, R¹², R¹³, and R¹⁴ are each independently H, an optionally substituted C1-C4 alkyl, or an optionally substituted C6-C10 aryl group;
Z and Z' are each independently selected from the group consisting of iptycene-based structures and an optionally substituted formula (Z1);

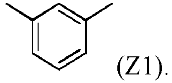

2. The copolymer according to claim 1, wherein m and n are each independently an integer from 50 to 1000; and/or,
0.95 ≥ n/(m+n) ≥ 0.5, preferably, 0.9 ≥ n/(m+n) ≥ 0.6.

3. The copolymer according to claim 1 or 2, wherein the iptycene-based structure is selected from the group consisting of triptycene-based structures and pentiptycene-based structures; preferably, the iptycene-based structure as Y is formula (Y5) and/or the iptycene-based structures as Z and Z' are each independently formula (Z2): 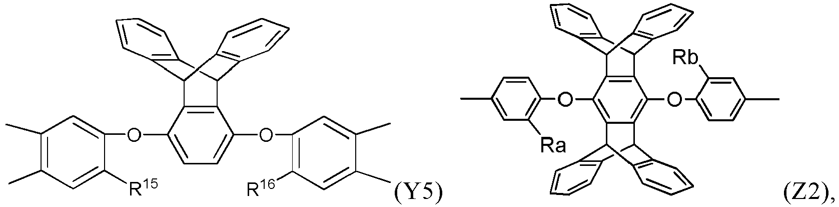
in formula (Y5), R¹⁵ and R¹⁶ are each independently H, an optionally substituted C1-C4 alkyl group, or an optionally substituted C6-C10 aryl group; and
in formula (Z2), Ra and Rb are each independently H, a C1-C4 alkyl group or a C1-C4 haloalkyl group.

4. The copolymer according to any one of claims 1 to 3, wherein X is any one selected from the group consisting of the structures shown below, 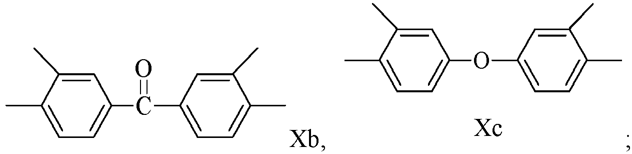 and/or,
Y is any one selected from the group consisting of the structures shown below, 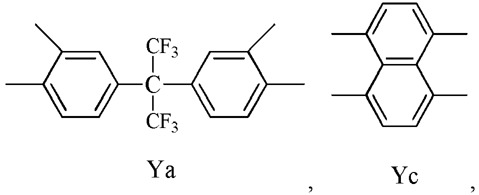 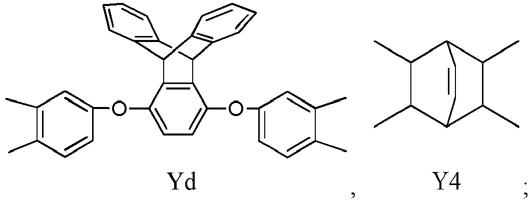 and/or,
Z and Z' are each independently selected from the structures represented by Z1 or Z3,

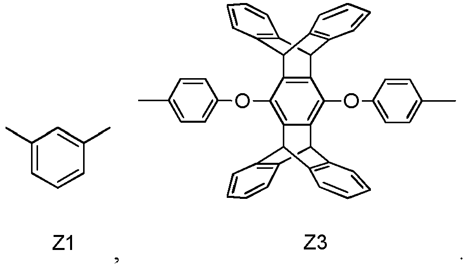

5. The copolymer according to claim 4, wherein
X is Xb, Y is Ya, Z and Z' are both Z1;
or, X is Xb, Y is Yd, Z and Z' are both Z1;
or, X is Xc, Y is Ya, Z and Z' are both Z1;
or, X is Xc, Y is Yc, Z and Z' are both Z1;
or, X is Xc, Y is Y4, Z and Z' are both Z1;
or, X is Xc, Y is Yd, Z and Z' are both Z1;
or, X is Xb, Y is Ya, Z and Z' are both Z3;
or, X is Xb, Y is Yd, Z and Z' are both Z3;
or, X is Xc, Y is Ya, Z and Z' are both Z3;
or, X is Xc, Y is Yd, Z and Z' are both Z3.

6. A method for preparing the polyimide random copolymer according to any one of claims 1 to 5, **characterized in that** the method includes the following steps:
(1) in the presence of a first solvent, mixing a mixture containing a dianhydride monomer represented by formula (II) and a dianhydride monomer represented by formula (III) with a diamine monomer and performing a condensation polymerization reaction to obtain a poly(amic acid); 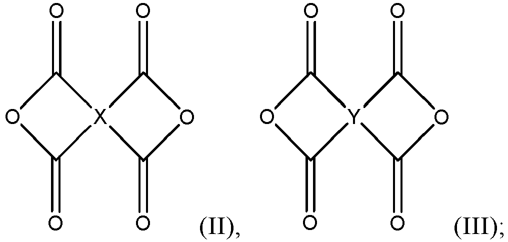
(2) imidizing the poly(amic acid) obtained in step (1) to obtain the polyimide random copolymer.

7. A membrane, **characterized in that** the membrane is made of the polyimide random copolymer according to any one of claims 1 to 5.

8. The membrane according to claim 7, wherein said membrane is a separation membrane, preferably a gas separation membrane.

9. The membrane according to claim 7 or 8, wherein the membrane is a hollow fiber membrane; preferably, the hollow fiber membrane includes a support layer and a dense layer attached to the outer surface of the support layer; preferably, the thickness of the dense layer is less than or equal to 1000nm and the porosity of the hollow fiber membrane is 40-80%; more preferably, the thickness of the dense layer is 100-500nm and the porosity of the hollow fiber membrane is 50-70%.

10. Use of the polyimide random copolymer according to any one of claims 1 to 5 or the membrane according to any one of claims 7 to 9 in gas separation.

11. A method for preparing a polyimide-based hollow fiber membrane, **characterized in that** the method includes the following steps:
(1) preparing a casting solution containing the polyimide according to any one of claims 1 to 5;
(2) extruding a bore fluid and the casting solution, and then solidifying to obtain a hollow fiber membrane precursor;
(3) winding and extracting the hollow fiber membrane precursor to obtain the polyimide-based hollow fiber membrane.

12. The method for preparing a polyimide-based hollow fiber membrane according to claim 11, **characterized in that** the method includes the following steps:
(1) preparing the casting solution containing the polyimide, a diluent and an optional additive, wherein the diluent contains a good solvent for the polyimide, a first poor solvent for the polyimide and a second poor solvent for the polyimide, wherein the boiling point B1 of the first poor solvent for the polyimide is higher than the boiling point B2 of the second poor solvent for the polyimide;
(2) extruding the bore fluid and the casting solution at a temperature T, and then solidifying to obtain the hollow fiber membrane precursor, where B2 ≤ T < B1;
(3) winding and extracting the hollow fiber membrane precursor to obtain the polyimide-based hollow fiber membrane.

13. The method according to claim 12, wherein, in step (1), the content of the polyimide is 20-40wt%, the content of the diluent is 50-75wt%, and the content of the additive, when present, is 0.5-10wt%, based on the total weight of the casting solution; preferably, the content of the polyimide is 25-35wt%, the content of the diluent is 60-70wt%, and the content of the additive, when present, is 1-5wt%, based on the total weight of the casting solution; and/or,
wherein the boiling point B1 of the first poor solvent for the polyimide is 5-200 °C higher, preferably 10-20 °C higher than the boiling point B2 of the second poor solvent for the polyimide; and/or,
the first poor solvent for the polyimide is at least one selected from the group consisting of C2-C4 saturated monohydric alcohols, γ-butyrolactone, water and mixtures thereof; and/or,
the second poor solvent for the polyimide is at least one selected from the group consisting of C3-C5 alkanes, tetrahydrofuran, acetone, chloroform, and mixtures thereof; and/or,
the good solvent for the polyimide is at least one selected from the group consisting of N-methyl-2-pyrrolidone, N,N-dimethylformamide, N,N-dimethylacetamide and mixtures thereof; and/or,
the weight ratio of the good solvent for the polyimide, the first poor solvent for the polyimide and the second poor solvent for the polyimide is 1: (0.001-0.5): (0.1-0.5), preferably 1: (0.15-0.3): (0.15-0.3); and/or,
wherein the additive is a lithium salt, preferably selected from lithium nitrate and/or lithium chloride; and/or,
wherein, in step (1), the casting solution is prepared according to a method including the following steps: stirring the polyimide, the diluent and the optional additives at 20-50 °C and 100-1200r/min for 12-48h, and then vacuum deaerating and removing impurities by filtrating; preferably, the conditions for vacuum deaeration include: a pressure of -0.1MPa to -0.095MPa, a temperature of 20-30°C, a rotation speed of 10-50r/min, and a period of 12-24h; and/or,
in step (2), the bore fluid contains a solvent A and a solvent B, wherein the solvent A is at least one selected from the group consisting of N-methyl-2-pyrrolidone, N,N-dimethylformamide, N,N-dimethylacetamide and mixtures thereof, the solvent B is at least one selected from the group consisting of C1-C4 saturated monohydric alcohols, γ-butyrolactone, water and mixtures thereof; preferably, the solvent A accounts for 50-99wt%, preferably 60-95wt% of the total weight of the bore fluid; and/or,
the extruding is performed in a spinneret, wherein the temperature for extruding is 40-75 °C, preferably 60-70 °C; and/or,
during the extruding process, the flow rate of the casting solution is 6-30 mL/min; and/or,
during the extruding process, the flow rate of the bore fluid is 2-10 mL/min; and/or,
before the solidifying, passing the hollow fibers obtained by extruding through an air gap; preferably, the height of the air gap is 5-30cm; preferably, the air gap is heated by an annular sleeve, preferably the temperature is controlled to be 50-150 °C; and/or,
the solidifying is carried out in a coagulation bath; preferably, the bath liquid used in the coagulation bath is a solvent C and/or water, and the temperature of the coagulation bath is 40-70 °C; preferably, the solvent C is at least one selected from the group consisting of C1-C4 saturated monohydric alcohols, γ-butyrolactone, water and mixtures thereof; and/or,
wherein, in step (3), the winding speed is 0.5-2m/s; and/or,
the extraction agent used for extracting is at least one selected from the group consisting of water, C1-C4 saturated monohydric alcohols, C5-C7 alkanes, and mixtures thereof; and/or,
the conditions for the extracting include: a temperature of 20-35 °C, and a period of 3-48h; and/or,
a drying step is further included after the extracting; preferably, the conditions for the drying include: a temperature of 20-35 °C and a period of 2-15h.

14. A system for purifying helium gas, wherein the system includes a catalytic dehydrogenation separation unit, a polymer membrane separation unit and a palladium membrane separation unit; **characterized in that** the polymer membrane separation unit includes the membrane according to any one of claims 7-9.

15. The system for purifying helium gas according to claim 14, wherein the catalytic dehydrogenation separation unit includes a catalytic oxidation device and an adsorption device.

16. A method for purifying helium gas, wherein the method includes: subjecting a feed gas containing helium gas sequentially to catalytic dehydrogenation separation, polymer membrane separation and palladium membrane dehydrogenation separation to obtain a purified helium gas; **characterized in that** the polymer membrane separation includes the using the membrane according to any one of claims 7-9.

17. The method according to claim 16, wherein the feed gas is at least one selected from the group consisting of natural gas, shale gas, helium-rich hydrogen-containing gas and liquefied natural gas boil off gas (BOG); and/or,
wherein the catalytic dehydrogenation separation includes catalytic oxidation and adsorption, and the catalyst used in the catalytic oxidation is at least one noble metal catalyst selected from the group consisting of Pt, Pd, Rh, Ru, Au and mixtures thereof; and/or,
the conditions for the catalytic oxidation include: a temperature of 40-150 °C, preferably 50-120 °C; and a space velocity of the feed gas of 1-10000 m³/m³ ·h, preferably 10-1000 m³/m³·h; preferably, the conditions for the catalytic oxidation are such that 90-99 volume% of the hydrogen in the feed gas is converted into H₂O; preferably, the manner for the adsorption is alkaline adsorption; preferably, the adsorbent for the adsorption is at least one selected from the group consisting of potassium hydroxide, sodium hydroxide, quicklime, soda lime and mixtures thereof; preferably, the conditions for the adsorption include: an adsorption temperature of 70-90 °C.

18. The method according to any one of claims 16-17, wherein the polymer membrane separation adopts one-stage or multi-stage separation; and/or,
the conditions for the polymer membrane separation include: before performing the polymer membrane separation, the pressure of the gas obtained by catalytic dehydrogenation separation is controlled to be 0.01-50MPa, and the temperature of the gas is controlled to be 20-100°C.

19. The method according to any one of claims 16 to 18, wherein the conditions for the palladium membrane dehydrogenation separation include: before performing the palladium membrane dehydrogenation separation, the temperature of the gas obtained by the polymer membrane separation is controlled to be 50-500 °C, preferably controlled to be 200-500 °C; and the pressure of the gas is controlled to be 1-50MPa, preferably controlled to be 2-20MPa.

20. The method according to any one of claims 16 to 19, wherein the thickness of the palladium membrane used in the palladium membrane dehydrogenation separation is 5-100 µm; and/or,
the palladium membrane is a tubular membrane or a porous support composite membrane; preferably, the porous support in the porous support composite membrane is one selected from the group consisting of porous ceramics and porous stainless steel; and/or,
the palladium membrane is a pure palladium membrane or a palladium-based alloy membrane; preferably, the palladium-based alloy membrane is at least one selected from the group consisting of palladium-yttrium alloy membrane, palladium-cerium alloy membrane, palladium-copper alloy membrane, palladium-gold alloy membrane, palladium-nickel alloy membrane and palladium-silver alloy membrane.
